(19)

Europäisches
Patentamt
European
Patent Office
Office européen
des brevets

(11) **EP 4 596 785 A1**

(12) **EUROPEAN PATENT APPLICATION**
published in accordance with Art. 153(4) EPC

(43) Date of publication:
06.08.2025 Bulletin 2025/32

(21) Application number: 23872287.0

(22) Date of filing: 26.09.2023

(51) International Patent Classification (IPC):
*D06M 15/227* (2006.01)     *B29B 11/16* (2006.01)
*C08C 19/28* (2006.01)     *C08F 210/02* (2006.01)
*C08K 9/08* (2006.01)     *C08L 9/00* (2006.01)
*C08L 23/08* (2025.01)     *C08L 23/26* (2025.01)
*C08L 33/04* (2006.01)     *C08L 75/04* (2006.01)
*C08L 101/00* (2006.01)     *D06M 15/263* (2006.01)
*D06M 15/564* (2006.01)     *D06M 15/693* (2006.01)
*D06M 101/40* (2006.01)

(52) Cooperative Patent Classification (CPC):
**B29B 11/16; C08C 19/28; C08F 210/02;
C08K 9/08; C08L 9/00; C08L 23/08; C08L 23/26;
C08L 33/04; C08L 75/04; C08L 101/00;
D06M 15/227; D06M 15/263; D06M 15/564;
D06M 15/693**

(86) International application number:
**PCT/JP2023/034807**

(87) International publication number:
**WO 2024/071064 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.09.2022 JP 2022155348**

(71) Applicants:
• **Mitsui Chemicals, Inc.**
**Tokyo 104-0028 (JP)**
• **Formosa Plastics Corporation**
**Taipei (TW)**

(72) Inventors:
• **MIZUNO, Shunya**
**Sodegaura-shi, Chiba 299-0265 (JP)**
• **ITOU, Yuichi**
**Sodegaura-shi, Chiba 299-0265 (JP)**
• **YANO, Masahiro**
**Nagoya-shi, Aichi 457-8522 (JP)**
• **LIN, Sheng-Hsun**
**Taipei (TW)**
• **CHOU, Cheng-Chun**
**Taipei (TW)**
• **LI, Yu-Sheng**
**Tapei (TW)**

(74) Representative: **Hoffmann Eitle**
**Patent- und Rechtsanwälte PartmbB
Arabellastraße 30
81925 München (DE)**

(54) **WATER DISPERSION, CARBON FIBER BUNDLE, AND UNIDIRECTIONAL MATERIAL**

(57)     Provided is a water dispersion that suppresses fuzz of a cut end surface of a carbon fiber bundle, can improve bundling properties of carbon fibers and ILSS of laminated bodies of UD sheets, and can be used as a carbon fiber sizing agent in a unidirectional material. The dispersion has a resin component that: includes an ethylene•$\alpha$-olefin copolymer (A) or an acid modified product (B) thereof satisfying all of requirements (a1) to (a3); has a storage elastic modulus at 25°C of 100-100,000 MPa or less; and is present in a ratio of 0.01-50 mass% or less. Requirements: (a1) the kinematic viscosity at 100°C is 10-5,000 mm$^2$/s; (a2) the content ratio of structural units derived from ethylene is 30-85 mol%; and (a3) the molecular weight distribution (Mw/Mn) of molecular weight obtained by polystyrene conversion measured by gel permeation chromatography (GPC) is 2.5 or less.

EP 4 596 785 A1

**Description**

Technical Field

The present invention relates to an aqueous dispersion, a carbon fiber bundle, and a unidirectional material.

Background Art

Carbon fibers are lightweight and have high strength and high rigidity, and are therefore used as reinforcing materials in a wide range of fields. Carbon fibers are sometimes used as fiber-reinforced resins in combination with thermoplastic resins. Since this fiber-reinforced resin has excellent mechanical properties and dimensional stability, it is used in a wide range of fields in the same manner.

On the other hand, polyolefin-based resins have excellent properties such as being generally inexpensive, exhibiting excellent processability and chemical resistance, being less likely to generate harmful gases when incinerated, and being superior in recyclability, and thus are also used in a wide range of fields. For example, PTL 1 describes a resin composition for a masterbatch that includes an ethylene/$\alpha$-olefin copolymer satisfying a specific requirement.

The polyolefin-based resin may also be used as a matrix resin for a fiber-reinforced resin. As the matrix resin, a polypropylene-based resin, one of the polyolefin-based resins, is used. In recent years, the use of polyolefin-based resins as a treatment agent for carbon fibers has also been considered. For example, PTL 2 describes the use of a carbon fiber bundle treated with a fiber treatment agent containing a specific propylene-based resin in a fiber-reinforced resin composition that is suitable for a tape winding molding method using a laser fusion method. In PTL 2, it is described that this carbon fiber bundle is less likely to generate fuzz when rubbed.

Citation List

Patent Literature

PTL 1
WO2019/172355
PTL 2
WO2017/183672

Summary of Invention

Technical Problem

PTL 2 describes that the generation of fuzz when rubbed is reduced by treating a carbon fiber bundle with a fiber treatment agent including a specific propylene-based resin. On the other hand, according to the findings of the present inventors, when a carbon fiber bundle or a molded article of a fiber-reinforced resin composition including a carbon fiber bundle is subjected to cutting processing or is torn for some reason, carbon fibers may protrude from the cut end surface, generating fuzz. In particular, a fiber-reinforced resin (unidirectional material) in which carbon fibers are oriented in one direction is often used by being cut to have a tape shape, and thus, the generation of fuzz from the cut end surface can easily become a problem.

Accordingly, the present inventors have variously studied a method for more efficiently reducing the generation of fuzz from the cut end surface, and have found that the use of a hydrocarbon-based synthetic oil can reduce the generation of fuzz to the same extent as or more than that in PTL 2. However, when a hydrocarbon-based synthetic oil was used, when UD sheets were laminated and fused, the interlayer shear strength (ILSS) decreases, or the bundling of carbon fibers decreases, leading to a decrease in processability.

The present invention has been made in view of the above-described problems, and an object of the present invention is to provide an aqueous dispersion containing a resin component that can be used as a bundling agent for a carbon fiber bundle to be used in a unidirectional material. The aqueous dispersion can reduce the generation of fuzz from a cut end surface when the carbon fiber bundle is cut, and can also improve the interlayer shear strength (ILSS) and the bundling property of carbon fibers when UD sheets are laminated and fused. Another object of the present invention is to provide a carbon fiber bundle to be used in a unidirectional material, which is obtained by treating carbon fibers with the aqueous dispersion, and the unidirectional material.

Solution to Problem

One aspect of the present invention for achieving the above object relates to aqueous dispersions of the following [1] to [7].

[1] An aqueous dispersion in which a resin component is dispersed in water and which is used for bundling carbon fibers, the carbon fibers being used in production of a unidirectional material in which the carbon fibers oriented in one direction are impregnated with a resin, in which:

the resin component includes an ethylene/$\alpha$-olefin copolymer (A) satisfying all of requirements (a1) to (a3) below or an acid-modified product (B) of the ethylene/$\alpha$-olefin copolymer (A):

(a1) a kinematic viscosity at 100°C is 10 mm$^2$/s or more and 5,000 mm$^2$/s or less,
(a2) a content ratio of a constitutional unit derived from ethylene is 30 mol% or more and 85 mol% or less, and
(a3) a molecular weight distribution (Mw/Mn) of a molecular weight measured by gel permeation chromatography (GPC) and obtained in terms of polystyrene is 2.5 or less;

a storage elastic modulus of the resin component at 25°C is 100 MPa or more and 100,000 MPa or less; and
a proportion of a total mass of the resin component with respect to a total mass of the aqueous dispersion is 0.01% by mass or more and 50% by mass or less.

[2] An aqueous dispersion in which a resin component is dispersed in water and which is used for bundling carbon fibers, the carbon fibers being used in production of a unidirectional material in which the carbon fibers oriented in one direction are impregnated with a resin, in which:

the resin component includes

a first resin component that is an ethylene/$\alpha$-olefin copolymer (A) satisfying all of requirements (a1) to (a3) below or an acid-modified product (B) of the ethylene/$\alpha$-olefin copolymer (A):

(a1) a kinematic viscosity at 100°C is 10 mm$^2$/s or more and 5,000 mm$^2$/s or less,
(a2) a content ratio of a constitutional unit derived from ethylene is 30 mol% or more and 85 mol% or less, and
(a3) a molecular weight distribution (Mw/Mn) measured by gel permeation chromatography (GPC) and obtained in terms of polystyrene is 2.5 or less, and

a second resin component that is at least one resin selected from the group consisting of an acrylic resin (C), a urethane-based resin (D), and diene-based rubber (E); and

a proportion of a total mass of the resin component with respect to a total mass of the aqueous dispersion is 0.01% by mass or more and 50% by mass or less.

[3] The aqueous dispersion according to [1] or [2], including:

a first resin component that is an ethylene/$\alpha$-olefin copolymer (A) satisfying all of the above requirements (a1) to (a3) or an acid-modified product (B) of the ethylene/$\alpha$-olefin copolymer (A), and
a second resin component that is at least one resin selected from the group consisting of an acrylic resin (C), a urethane-based resin (D), and diene-based rubber (E).

[4] The aqueous dispersion according to [2] or [3], in which
the second resin component is compatible with the first resin component.
[5] The aqueous dispersion according to any one of [1] to [4], in which:
the ethylene/$\alpha$-olefin copolymer (A) satisfies at least one of requirements (a4) to (a7) below:

(a4) a weight average molecular weight (Mw) measured by the gel permeation chromatography (GPC) and obtained in terms of polystyrene is 1,000 or more and 50,000 or less,
(a5) a B value represented by equation [1] is 1.1 or more:
[Expression 1]

$$B = \frac{P_{OE}}{2P_O \cdot P_E} \quad \cdots [1]$$

[in equation [1], $P_E$ represents the content ratio (mol%) of the constitutional unit derived from ethylene, $P_O$ represents a content ratio (mol%) of a constitutional unit derived from an $\alpha$-olefin, and $P_{OE}$ represents a content ratio (mol%) of an ethylene-$\alpha$-olefin chain in all dyad chains],
(a6) an unsaturated bond content measured by $^1$H-NMR is less than 0.5 per 1,000 carbon atoms, and
(a7) a melting point is not observed.

[6] The aqueous dispersion according to any one of [1] to [5], in which:
the acid-modified product (B) satisfies at least one of requirements (b1) to (b4) below:

(b 1) an acid value is 1 mgKOH/g or more and 300 mgKOH/g or less,
(b2) an apparent viscosity at 150°C is 1 cPs or more and 1,000 cPs or less,
(b3) a weight average molecular weight (Mw) measured by the gel permeation chromatography (GPC) and obtained in terms of polystyrene is 1,000 or more and 50,000 or less, and
(b4) a molecular weight distribution (Mw/Mn) measured by the gel permeation chromatography (GPC) and obtained in terms of polystyrene is 2.5 or less.

[7] The aqueous dispersion according to any one of [1] to [6], in which:
the acid-modified product (B) is an acid-modified product of the ethylene/$\alpha$-olefin copolymer (A) with maleic acid or maleic anhydride.
Another aspect of the present invention for achieving the above object relates to carbon fiber bundles of the following [8] to [12].
[8] A carbon fiber bundle in which carbon fibers are bundled, the carbon fibers being used in production of a unidirectional material in which the carbon fibers oriented in one direction are impregnated with a resin, in which:

the carbon fibers are bundled by a bundling agent adhered to the carbon fibers;
the bundling agent includes an ethylene/$\alpha$-olefin copolymer (A) satisfying all of requirements (a1) to (a3) below or an acid-modified product (B) of the ethylene/$\alpha$-olefin copolymer (A):

(a1) a kinematic viscosity at 100°C is 10 mm$^2$/s or more and 5,000 mm$^2$/s or less,
(a2) a content ratio of a constitutional unit derived from ethylene is 30 mol% or more and 85 mol% or less, and
(a3) a molecular weight distribution (Mw/Mn) of a molecular weight measured by gel permeation chromatography (GPC) and obtained in terms of polystyrene is 2.5 or less; and

a storage elastic modulus of a resin component of the bundling agent at 25°C is 100 MPa or more and 100,000 MPa or less, the bundling agent including the ethylene/$\alpha$-olefin copolymer (A) or the acid-modified product (B) thereof.

[9] A carbon fiber bundle in which carbon fibers are bundled, the carbon fibers being used in production of a unidirectional material in which the carbon fibers oriented in one direction are impregnated with a resin, in which:

the carbon fibers are bundled by a bundling agent adhered to the carbon fibers; and
the bundling agent includes
a first resin component that is an ethylene/$\alpha$-olefin copolymer (A) satisfying all of the requirements (a1) to (a3) below or an acid-modified product (B) of the ethylene/$\alpha$-olefin copolymer (A):

(a1) a kinematic viscosity at 100°C is 10 mm$^2$/s or more and 5,000 mm$^2$/s or less,
(a2) a content ratio of a constitutional unit derived from ethylene is 30 mol% or more and 85 mol% or less, and
(a3) a molecular weight distribution (Mw/Mn) of a molecular weight measured by gel permeation chromatography (GPC) and obtained in terms of polystyrene is 2.5 or less, and

a second resin component that is at least one resin selected from the group consisting of an acrylic resin (C), a urethane-based resin (D), and diene-based rubber (E).

[10] The aqueous dispersion according to [8] or [9], including:

a first resin component that is an ethylene/α-olefin copolymer (A) satisfying all of the above requirements (a1) to (a3) or an acid-modified product (B) of the ethylene/α-olefin copolymer (A), and
a second resin component that is at least one resin selected from the group consisting of an acrylic resin (C), a urethane-based resin (D), and diene-based rubber (E).

[11] The carbon fiber bundle according to any one of [8] to [10], in which the acid-modified product (B) is an acid-modified product of the ethylene/α-olefin copolymer (A) with maleic acid or maleic anhydride.

[12] The carbon fiber bundle according to any one of [8] to [11], in which a proportion of a total mass of the resin component or a total mass of the first resin component and the second resin component with respect to a total mass of the carbon fiber bundle is 0.1% by mass or more and 5.0% by mass or less.

Another aspect of the present invention for achieving the above object relates to unidirectional materials of the following [13] to [15].

[13] A unidirectional material including:

the carbon fiber bundle according to any one of [8] to [12], the carbon fiber bundle being oriented in one direction; and
a matrix resin with which the carbon fiber bundle is impregnated, the matrix resin being a thermoplastic resin, in which
when a sum of a total mass of the carbon fiber bundle and a total mass of the matrix resin is 100 parts by mass,

a content of the carbon fiber bundle is 1 part by mass or more and 80 parts by mass or less, and
a content of the matrix resin is 20 parts by mass or more and 99 parts by mass or less.

[14] The unidirectional material according to [13], in which the unidirectional material has a thin film shape.
[15] The unidirectional material according to [13], in which the unidirectional material has a pellet shape.

Advantageous Effects of Invention

The present invention provides an aqueous dispersion containing a resin component that can be used as a bundling agent for a carbon fiber bundle to be used in a unidirectional material (the aqueous dispersion can reduce the generation of fuzz from a cut end surface when the carbon fiber bundle is cut and can also improve the interlayer shear strength (ILSS) and the bundling property of carbon fibers when UD sheets are laminated and fused), a carbon fiber bundle to be used in a unidirectional material (the carbon fiber bundle is obtained by treating carbon fibers with the aqueous dispersion), and a unidirectional material.

Description of Embodiments

1. Aqueous Dispersion

An embodiment of the present invention relates to an aqueous dispersion in which a resin component is dispersed in water, and which is used for bundling carbon fibers that are used in the production of a unidirectional material.
The above aqueous dispersion contains a resin component and water as a dispersion medium.

1-1. Resin Component

The above resin component includes an ethylene/α-olefin copolymer (A) or an acid-modified product (B) thereof.

1-1-1. Ethylene/α-olefin copolymer (A) or acid-modified product (B) thereof (Ethylene/α-olefin copolymer (A))

The ethylene/α-olefin copolymer (A) satisfies all of the following requirements (a1) to (a3).

(a1) A kinematic viscosity at 100°C is 10 mm$^2$/s or more and 5,000 mm$^2$/s or less.
(a2) A content ratio of a constitutional unit derived from ethylene is 30 mol% or more and 85 mol% or less.
(a3) A molecular weight distribution (Mw/Mn) of a molecular weight measured by gel permeation chromatography (GPC) and obtained by in terms of polystyrene is 2.5 or less.

The kinematic viscosity of the ethylene/$\alpha$-olefin copolymer (A), namely requirement (a1), is a value measured by the method described in JIS K2283 (2000). The kinematic viscosity of the ethylene/$\alpha$-olefin copolymer (A) is 10 mm$^2$/s or more and 5,000 mm$^2$/s or less, is preferably 10 mm$^2$/s or more and 2,500 mm$^2$/s or less, is more preferably 15 mm$^2$/s or more and 2,500 mm$^2$/s or less, and is further preferably 15 mm$^2$/s or more and 500 mm$^2$/s or less. When the kinematic viscosity of the ethylene/$\alpha$-olefin copolymer (A) is 10 mm$^2$/s or more, the content of easily volatile components decreases, the flammability decreases, the storage stability tends to be improved, and the reduction of the amount of the aqueous dispersion due to volatilization tends to be limited. When the kinematic viscosity of the ethylene/$\alpha$-olefin copolymer (A) is 5,000 mm$^2$/s or less, the ethylene/$\alpha$-olefin copolymer (A) becomes a flexible and viscous oil, which makes it easy to adhere to the surface of carbon fibers and reduce the generation of fuzz, and also makes it easy for the resin component to be more uniformly dispersed in water.

The content ratio of the constitutional unit derived from ethylene in the ethylene/$\alpha$-olefin copolymer (A) (based on the total content ratios of all monomer units of 100 mol%), namely requirement (a2), is a value obtained by measuring with $^{13}$C-NMR in accordance with the method described in "Koubunshi Bunseki Handbook (Polymer Analysis Handbook)" Asakura Publishing Co., Ltd., 2008, first edition, pp. 184 to 211). Alternatively, the sample obtained by this method may be used as a known sample, and the value obtained by measuring the sample using Fourier transform infrared spectroscopy (FT-IR) may be used. The content ratio of the constitutional unit derived from ethylene in the ethylene/$\alpha$-olefin copolymer (A) is 30 mol% or more and 85 mol% or less, preferably 40 mol% or more and 70 mol% or less, and more preferably 45 mol% or more and 65 mol% or less. When the content ratio of the constitutional unit derived from ethylene in the ethylene/$\alpha$-olefin copolymer (A) is 85 mol% or less, the crystallization of the ethylene/$\alpha$-olefin copolymer (A) is less likely to occur, resulting in a lower likelihood of an increase in the viscosity of the copolymer and easier prevention of the generation of fuzz. Further, the resin component is less likely to become solid and is more likely to be uniformly dispersed in water.

The molecular weight distribution (Mw/Mn) of the ethylene/$\alpha$-olefin copolymer (A), namely requirement (a3), is, more specifically, the ratio of the weight average molecular weight (Mw) to the number average molecular weight (Mn) measured by the above GPC. The molecular weight distribution (Mw/Mn) of the ethylene/$\alpha$-olefin copolymer (A) is 2.5 or less, preferably 2.3 or less, and more preferably 2.0 or less. In general, the larger the distribution molecular weight distribution (Mw/Mn) of a polymer, the more low and high molecular weight components the polymer contains. When the molecular weight distribution (Mw/Mn) of the ethylene/$\alpha$-olefin copolymer (A) is 2.5 or less, the content of low molecular weight component decreases, and thus the content of easily volatile components decreases, the flammability decreases, the storage stability tends to be improved, and the reduction of the amount of the aqueous dispersion due to volatilization tends to be limited. Further, when the molecular weight distribution (Mw/Mn) of the ethylene/$\alpha$-olefin copolymer (A) is 2.5 or less, the content of the high molecular weight component decreases, making it easier for the resin component to be more uniformly dispersed in water. The lower limit of the molecular weight distribution (Mw/Mn) is not particularly limited, but is usually 1.0 or more.

In addition to the above requirements (a1) to (a3), it is preferable that the ethylene/$\alpha$-olefin copolymer (A) satisfies at least one of the following requirements (a4) to (a7).

(a4) A weight average molecular weight (Mw) measured by gel permeation chromatography (GPC) and obtained in terms of polystyrene is 1,000 or more and 50,000 or less.
(a5) AB value represented by equation [1] is 1.1 or more.

[Expression 2]

$$B = \frac{P_{OE}}{2P_O \cdot P_E} \quad \cdots [1]$$

[In equation [1], $P_E$ represents a content ratio (mol%) of a constitutional unit derived from ethylene, $P_O$ represents a content ratio (mol%) of a constitutional unit derived from an $\alpha$-olefin, and $P_{OE}$ represents a content ratio (mol%) of an ethylene-$\alpha$-olefin chain in all dyad chains.]

(a6) The unsaturated bond content measured by $^1$H-NMR is less than 0.5 per 1,000 carbon atoms.
(a7) A melting point is not observed.

The ethylene/$\alpha$-olefin copolymer (A) is more preferably satisfies at least two of the above requirements (a4) to (a7), further preferably satisfies any three of the requirements, and particularly preferably satisfies all the requirements.

The weight average molecular weight (Mw) of the ethylene/$\alpha$-olefin copolymer (A), namely requirement (a4), is the weight average molecular weight (Mw) measured by the above GPC. The weight average molecular weight (Mw) of the ethylene/$\alpha$-olefin copolymer (A) is preferably 1,000 or more and 50,000 or less, more preferably 1,500 or more and 30,000 or less, further preferably 1,500 or more and 20,000 or less, and particularly preferably 1,500 or more and 7,000 or less. When the weight average molecular weight (Mw) of the ethylene/$\alpha$-olefin copolymer (A) is 1,000 or more, the content of easily volatile components decreases, the flammability decreases, the storage stability tends to be improved, and the reduction of the amount of the aqueous dispersion due to volatilization tends to be limited. When the weight average molecular weight (Mw) of the ethylene/$\alpha$-olefin copolymer (A) is 50,000 or less, the resin component is more likely to be uniformly dispersed in water.

The B value of the ethylene/$\alpha$-olefin copolymer (A), namely requirement (a5), is an index indicating the randomness of the copolymer monomer chain distribution in the molecular chains of the ethylene/$\alpha$-olefin copolymer (A). $P_E$, $P_O$, and $P_{OE}$ in equation [1] can be determined by measuring a $^{13}$C-NMR spectrum and based on known literatures such as reports of J.C. Randall [Macromolecules, 15,353 (1982)] and J. Ray [Macromolecules, 10,773 (1977)] and "Koubunshi Bunseki Handbook (Polymer Analysis Handbook)" Asakura Publishing Co., Ltd., 2008, first edition, pp. 184 to 211).

The B value of the ethylene/$\alpha$-olefin copolymer (A) is preferably 1.1 or more, and more preferably 1.2 or more. The upper limit of the B value of the ethylene/$\alpha$-olefin copolymer (A) is not particularly limited, but is usually 2.0 or less. In general, the larger the B value, the less the chain structures of each constituent unit (a constituent unit derived from ethylene or a constituent unit derived from another $\alpha$-olefin) are, the more uniform the distribution of these constituent units is, and the narrower the composition distribution of the copolymer is. When the B value of the ethylene/$\alpha$-olefin copolymer (A) is 1.1 or more, the crystallization of the ethylene/$\alpha$-olefin copolymer (A) is less likely to occur, resulting in a less likely increase in the viscosity of the copolymer and easier reduction of the generation of fuzz. Further, the resin component is less likely to become solid and is more likely to be uniformly dispersed in water.

The unsaturated bond content of the ethylene/$\alpha$-olefin copolymer (A), namely requirement (a6), is the number of unsaturated bonds per 1,000 carbon atoms, as measured by $^1$H-NMR. Examples of the unsaturated bonds include double bonds derived from vinyl compounds, vinylidene compounds, di-substituted olefin compounds, and tri-substituted olefin compounds. The above unsaturated bond content (number) in the ethylene/$\alpha$-olefin copolymer (A) is preferably less than 0.5, more preferably less than 0.3, further preferably less than 0.2, and particularly preferably less than 0.1. When above unsaturated bond content in the ethylene/$\alpha$-olefin copolymer (A) is less than 0.5, the oxidation stability and heat resistance of the ethylene/$\alpha$-olefin copolymer (A) are improved, and the heat resistance of the converging agent also tends to be improved.

The fact that the melting point of the ethylene/$\alpha$-olefin copolymer (A) is not observed, namely requirement (a7), means that the melting enthalpy ($\Delta$H) (unit: J/g) measured by differential scanning calorimetry (DSC) is substantially not measured, that is, that no peak is observed within the measurement range in the differential scanning calorimetry (DSC) or that the observed melting enthalpy is 1 J/g or less. The melting point (Tm) and the melting enthalpy ($\Delta$H) are determined by analyzing a DSC curve obtained when an ethylene/$\alpha$-olefin copolymer (A) cooled to -100°C is heated to 150°C at a heating rate of 10°C/min by differential scanning calorimetry (DSC), based on JIS K7121 (2012). When the ethylene/$\alpha$-olefin copolymer (A) is a polymer whose melting point (Tm) is not observed, the crystallization of the ethylene/$\alpha$-olefin copolymer (A) are less likely to be generated, and as a result, the viscosity of the copolymer is less likely to increase, and the generation of fuzz is easily reduced. Further, the resin component is less likely to become solid and is more likely to be uniformly dispersed in water.

The above requirements (a1) to (a7) can be adjusted by a method known to those skilled in the art. For example, the kinematic viscosity of the ethylene/$\alpha$-olefin copolymer (A) at 100°C (requirement (a1)) can be adjusted by the molecular weight, and the kinematic viscosity can be increased by increasing the molecular weight of the ethylene/$\alpha$-olefin copolymer (A) and can be decreased by decreasing the molecular weight of the ethylene/$\alpha$-olefin copolymer (A). Further, the molecular weight distribution (Mw/Mn) of the ethylene/$\alpha$-olefin copolymer (A) (requirement (a3)) can be adjusted by removing low molecular weight components using a known method such as vacuum distillation. Further, the unsaturated bond content (requirement (a6)) can be reduced by performing hydrogenation using a known method.

The ethylene/$\alpha$-olefin copolymer (A) is a copolymer of ethylene and an $\alpha$-olefin other than ethylene. Examples of the $\alpha$-olefin include linear or branched $\alpha$-olefins having 3 or more and 20 or less carbon atoms such as propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, and 1-eicosene. Of these, linear or branched $\alpha$-olefins having 3 or more and 10 or less carbon atoms are preferred, and propylene, 1-butene, 1-hexene, and 1-octene are more preferred. Further, from the viewpoint of further enhancing the fluidity of the aqueous dispersion, propylene is preferred.

These $\alpha$-olefins can be used alone or in combination of two or more. Further, the ethylene/$\alpha$-olefin copolymer (A) may include a constituent unit derived from a monomer other than $\alpha$-olefins, such as a polar group-containing monomer, an aromatic vinyl compound, an alicyclic vinyl compound, and/or a cyclic olefin. The content of the constituent unit derived from a monomer other than the above $\alpha$-olefin is preferably 20 parts by mass or less, and more preferably 10 parts by mass or less, based on the total content of 100 parts by mass of the constituent units derived from ethylene and $\alpha$-olefin.

Further, the ethylene/$\alpha$-olefin copolymer (A) can be used alone or in combination of two or more. For example, two or more ethylene/$\alpha$-olefin copolymers (A) of different types of $\alpha$-olefins may be used in combination. At this time, the above requirements (a1) to (a7) are values obtained from the total of a plurality of types of ethylene/$\alpha$-olefin copolymers (A).

(Acid-Modified Product (B))

An acid-modified product (B) is an acid-modified product obtained by acid-modifying the above-described ethylene/$\alpha$-olefin copolymer (A). It is known that the acid-modified product (B) tends to improve the stability of an aqueous dispersion when dispersed in water, as compared to the above-described ethylene/$\alpha$-olefin copolymer (A). This is disclosed, for example, in Japanese Patent Application Laid-Open No. 2016-102157.

The acid-modified product (B) can be, for example, a polymer in which the ethylene/$\alpha$-olefin copolymer (A) is graft-modified with a graft component. When the ethylene/$\alpha$-olefin copolymer (A) has a small unsaturated bond content (for example, when the requirement (a6) described above is satisfied), it is presumed that the graft component is graft-bonded randomly to the main chain skeleton of the ethylene/$\alpha$-olefin copolymer (A).

Examples of the graft component include unsaturated carboxylic acids having 3 or more and 10 or less carbon atoms (preferably 3 or more and 8 or less carbon atoms) and derivatives of the unsaturated carboxylic acids. Examples of the derivatives of the unsaturated carboxylic acids include acid anhydrides, esters, amides, and imides of the unsaturated carboxylic acids. Examples of the unsaturated carboxylic acids include monobasic acids such as acrylic acid and methacrylic acid, and dibasic acids such as maleic acid, fumaric acid, itaconic acid, citraconic acid, and 5-norbornene-2,3-dicarboxylic acid. Examples of the acid anhydrides of the unsaturated carboxylic acids include acid anhydrides of dibasic acids such as maleic acid, itaconic acid, citraconic acid, and 5-norbornene-2,3-dicarboxylic acid. Examples of the esters of the unsaturated carboxylic acids include esters or half-esters such as methyl acrylate, methyl methacrylate, ethyl acrylate, ethyl methacrylate, glycidyl acrylate, monoethyl maleate, diethyl maleate, monomethyl fumarate, dimethyl fumarate, monomethyl itaconate, and diethyl itaconate. Examples of the amides of the unsaturated carboxylic acids include acrylamide, methacrylamide, maleic acid monoamide, maleic acid diamide, maleic acid-N-monoethylamide, maleic acid-N,N-diethylamide, maleic acid-N-monobutylamide, maleic acid-N,N-dibutylamide, fumaric acid monoamide, fumaric acid diamide, fumaric acid-N-monobutylamide, and fumaric acid-N,N-dibutylamide. Examples of the imides of the unsaturated carboxylic acid include maleimide, N-butylmaleimide, and N-phenylmaleimide. Among these, maleic acid and maleic anhydride are preferred because they have a high polarity as a single monomer and are less likely to generate by-products such as homopolymers in a modification reaction using a peroxide. These graft components can be used alone or in combination of two or more.

The acid-modified product (B) preferably satisfies at least one of the following requirements (b 1) to (b4).

(b1) An acid value is 1 mgKOH/g or more and 300 mgKOH/g or less.
(b2) An apparent viscosity at 150°C is 1 cPs or more and 1,000 cPs or less.
(b3) A weight average molecular weight (Mw) measured by gel permeation chromatography (GPC) and obtained in terms of polystyrene is 1,000 or more and 50,000 or less.
(b4) A molecular weight distribution (Mw/Mn) measured by gel permeation chromatography (GPC) and obtained in terms of polystyrene is 2.5 or less.

The acid-modified product (B) preferably satisfies at least two of the above requirements (b1) to (b4), more preferably satisfies any three of the requirements, and particularly preferably satisfies all the requirements.

The acid value of the acid-modified product (B), namely requirement (b1), is a value indicating the number of milligrams of potassium hydroxide required to neutralize the acid contained in 1 g of the acid-modified product (B), and is an index of the graft amount of the graft component. The acid value is a value measured by a method in accordance with JIS K0070 (1992). The acid value of the acid-modified product (B) is preferably 1 mgKOH/g or more and 300 mgKOH/g or less, more preferably 5 mgKOH/g or more and 200 mgKOH/g or less, and further preferably 10 mgKOH/g or more and 150 mgKOH/g or less. When the acid value of the acid-modified product (B) is 1 mgKOH/g or more, the polarity of the acid-modified product (B) increases, and thus, the stability of the aqueous dispersion tends to be improved. When the acid value of the acid-modified product (B) is 300 mgKOH/g or less, the hydrogen bonding between graft components is suppressed, the increase in the viscosity of the acid-modified product (B) is suppressed, and the resin component tends to be more uniformly dispersed in water. The acid value of the acid-modified product (B) can be adjusted by the graft amount of the graft component with respect to the ethylene/$\alpha$-olefin copolymer (A). For example, the acid value of the acid-modified product (B) can be increased by increasing the graft amount.

The apparent viscosity (Brookfield viscosity) of the acid-modified product (B) at 150°C, namely requirement (b2), is the Brookfield viscosity measured by the method described in JIS K7117-1 (1999). The apparent viscosity of the acid-modified product (B) at 150°C is preferably 1 cPs or more and 1,000 cPs or less, more preferably 5 cPs or more and 800 cPs or less, and further preferably 5 cPs or more and 50 cPs or less. When the apparent viscosity of the acid-modified product (B) at 150°C is within the above range, the balance between the low volatility of the acid-modified product (B) and the handling property and the dispersibility in water tends to become excellent.

The weight average molecular weight (Mw) of the acid-modified product (B), namely requirement (b3), is preferably 1,000 or more and 50,000 or less, more preferably 1,000 or more and 30,000 or less, further preferably 1,500 or more and 30,000 or less, and particularly preferably 2,000 or more and 10,000 or less. When the weight average molecular weight (Mw) of the acid-modified product (B) is 1,000 or more, the content of easily volatile components tends to decrease, the flammability tends to decrease, the storage stability tends to improve, and the reduction of the amount of the aqueous dispersion due to volatilization tends to be limited. When the weight average molecular weight (Mw) of the acid-modified product (B) is 50,000 or less, the resin component tends to be uniformly dispersed in water.

The molecular weight distribution (Mw/Mn) of the acid-modified product (B), namely requirement (b4), is preferably 2.5 or less, more preferably 2.3 or less, and further preferably 2.0 or less. When the molecular weight distribution (Mw/Mn) of the acid-modified product (B) is 2.5 or less, the content of low molecular weight components decreases, and thus the content of easily volatile components tends to decrease, the flammability tends to decrease, the storage stability tends to improve, and the reduction of the amount of the aqueous dispersion due to volatilization tends to be limited. Further, when the molecular weight distribution (Mw/Mn) of the ethylene/α-olefin copolymer (A) is 2.5 or less, the content of high molecular weight component decreases, making it easier for the resin component to be more uniformly dispersed in water. The lower limit of the molecular weight distribution (Mw/Mn) is not particularly limited, but is usually 1.0 or more.

The acid-modified product (B) preferably satisfies the following requirement (b5) in addition to at least one of the above requirements (b1) to (b4).

(b5) A melting point is not observed.

The acid-modified product (B) is preferably a polymer whose melting point (Tm) is not observed. The method for measuring the melting point (Tm) of the acid-modified product (B) and the definition such that the melting point (Tm) is not observed are as described in requirement (a7) of the ethylene/α-olefin copolymer (A). When the acid-modified product (B) is a polymer whose melting point (Tm) is not observed, crystallization of the acid-modified product (B) are less likely to be generated, and as a result, the viscosity of the copolymer is less likely to increase, the copolymer is less likely to become solid, and the resin component is more likely to be uniformly dispersed in water.

The acid-modified product (B) can be used alone or in combination of two or more. For example, two or more acid-modified products (B) of different types of α-olefins may be used in combination. At this time, the above requirements (b 1) to (b5) are values obtained from the total of a plurality of types of acid-modified products (B).

1-1-2. Physical Properties of Resin Component and Other Materials

According to the findings of the present inventors, the use of the above ethylene/α-olefin copolymer (A) or the acid-modified product (B) thereof can more efficiently reduce the generation of fuzz from the cut end surface of the bundled carbon fibers. Further, according to the findings of the present inventors, when the resin component including the above ethylene/α-olefin copolymer (A) or the acid-modified product (B) thereof further satisfies the following requirement (I) or (II), it is possible to enhance the ILSS of a laminate obtained by fusing and laminating UD sheets that are produced by using bundled carbon fibers, as well as to improve the bundling property of the carbon fibers.

(I) Storage elastic modulus at 25°C is 100 MPa or more and 100,000 MPa or less.
(II) The resin component further includes an acrylic resin (C), a urethane-based resin (D), or diene-based rubber (E).

The resin component may satisfy at least one of the above requirements (I) and (II), but it is preferable to satisfy both requirements.

When the resin component satisfies requirement (II), the above-described ethylene/α-olefin copolymer (A) or the acid-modified product (B) thereof is also simply referred to as the "first resin component," and the above-described acrylic resin (C), urethane-based resin (D), or diene-based rubber (E) is also simply referred to as the "second resin component."

1-1-2-1. Requirement (I)

By setting the storage elastic modulus of the resin component at 25°C to 100 MPa or more, it is possible to enhance the ILSS of a laminate obtained by fusing and laminating UD sheets that are produced by using bundled carbon fibers, and to further improve the bundling property of the carbon fibers.

According to the findings of the present inventors, when the above ethylene/α-olefin copolymer (A) or the acid-modified product (B) thereof is used as a bundling material, the generation of fuzz is reduced as compared to the prior art, but it has been difficult to achieve both an improvement in ILSS and an improvement in bundling property. That is, when the adhesion amount of these resin components to the carbon fibers is small, it is difficult to improve the bundling property of the carbon fibers, and on the other hand, when the adhesion amount of these resin components is large, the ILSS of a laminate obtained by fusing and laminating UD sheets using carbon fibers is difficult to increase.

In contrast, by using the above ethylene/$\alpha$-olefin copolymer (A) or the acid-modified product (B) thereof as a bundling material and setting the storage elastic modulus of the resin component at 25°C to 100 MPa or more, it is possible to improve the bundling property of the carbon fibers regardless of the adhesion amount of the resin component to the carbon fibers. Further, it is considered that the generation of fuzz from the cut end surface can be more efficiently reduced by improving the bundling property. Further, by using the above ethylene/$\alpha$-olefin copolymer (A) or the acid-modified product (B) thereof as a bundling material and setting the storage elastic modulus of the resin component at 25°C to 100 MPa or more, the cohesive strength of an obtained laminate is improved, and the ILSS of the laminate obtained by fusing and laminating UD sheets from carbon fibers can be increased.

On the other hand, by using the above ethylene/$\alpha$-olefin copolymer (A) or the acid-modified product (B) thereof as a bundling material and setting the storage elastic modulus of the resin component at 25°C to 100,000 MPa or less, the effect of reducing the fuzzing by the above ethylene/$\alpha$-olefin copolymer (A) or the acid-modified product (B) thereof is sufficiently exhibited, and the generation of fuzz from the cut end surface can be sufficiently reduced. Further, it is possible to prevent cracks generated in a resin portion and the propagation of the cracks when a shear stress in a direction in which the layers are peeled off is generated in a laminate obtained by fusing and laminating UD sheets that are produced by using carbon fibers, and it is possible to increase the ILSS of the laminate.

From the above viewpoint, the storage elastic modulus of the resin component at 25°C is preferably 1,000 MPa or more and 100,000 MPa or less, and more preferably 10,000 MPa or more and 100,000 MPa or less.

The storage elastic modulus of the resin component at 25°C can be adjusted to the above range by using the above-described ethylene/$\alpha$-olefin copolymer (A) or the acid-modified product (B) thereof in combination with another resin having a higher storage elastic modulus. The other resin may be a second resin component described in requirement (II), or may be another resin component such as an epoxy resin or an olefin resin (excluding ethylene/$\alpha$-olefin copolymer (A) and acid-modified product (B) thereof).

1-1-2-2. Requirement (II)

By including an acrylic resin (C), a urethane-based resin (D), or diene-based rubber (E) (second resin component) in the resin component, it is possible to enhance the ILSS of a laminate obtained by fusing and laminating UD sheets that are produced by using bundled carbon fibers, and to further improve the bundling property of the carbon fibers. Among these, the urethane-based resin (D) is preferred from the viewpoint of enhancing ILSS and bundling property, as well as increasing the effect of reducing the fuzz.

These second resin components may be used alone or in combination of two or more.

(Acrylic resin (C))

The acrylic resin (C) is a polymer compound that contains 40% by mass or more of a constituent unit derived from a monomer having a (meth)acryloyl group, based on the total amount of all constituent units. However, in the present specification, a polymer compound corresponding to the diene-based rubber (E) is not included in the acrylic resin (C).

In the present specification, (meth)acryloyl refers to both acryloyl and methacryloyl, (meth)acryl (or (meth) acrylic) refers to acryl (or acrylic) and methacryl (or methacrylic), (meth)acrylate refers to acrylate and methacrylate, and (meth)acrylo refers to acrylo and methacrylo.

The acrylic resin (C) includes a constituent unit derived from a monomer having one unsaturated vinyl group in the molecule. From the viewpoint of obtaining a desired storage elastic modulus, the acrylic resin (C) may include a constituent unit derived from a monomer having two or more unsaturated vinyl groups in the molecule.

Examples of the monomer having one unsaturated vinyl group in the molecule include (meth)acrylic acid ester monomers, aromatic vinyl monomers, vinyl ester monomers, vinyl cyanide compound monomers, halogenated monomers, olefin monomers, diene monomers, other vinyl monomers, unsaturated carboxylic acids, and acrylamides. Of these, acrylate monomers, methacrylate monomers, aromatic vinyl monomers, vinyl ester monomers, vinyl cyanide compound monomers, unsaturated carboxylic acids, acrylamides, and hydroxyl group-containing monomers are preferred.

Examples of the (meth)acrylic acid ester monomers include methyl (meth)acrylate, ethyl (meth)acrylate, isopropyl (meth)acrylate, n-butyl (meth)acrylate, isobutyl (meth)acrylate, n-amyl (meth)acrylate, isoamyl (meth)acrylate, n-hexyl (meth)acrylate, 2-ethylhexyl (meth)acrylate, octyl (meth)acrylate, decyl (meth)acrylate, dodecyl (meth)acrylate, octadecyl (meth)acrylate, cyclohexyl (meth)acrylate, phenyl (meth)acrylate, benzyl (meth)acrylate, and glycidyl (meth) acrylate.

The (meth)acrylic acid ester monomer may be a monomer having a hydroxyl group. Examples of the monomer having a hydroxyl group include 2-hydroxyethyl (meth)acrylate and 2-hydroxypropyl (meth)acrylate.

Examples of the aromatic vinyl monomers include styrene, p-methylstyrene, $\alpha$-methylstyrene, 2-methylstyrene, vinyl toluene, t-butylstyrene, chlorostyrene, vinylxylene, vinylnaphthalene, vinyl anthracene, vinyl anisole, and divinylbenzene.

Examples of the vinyl ester monomers include vinyl acetate. Examples of the vinyl cyanide compound include (meth)acrylonitrile. Examples of the halogenated monomers include vinylidene chloride and vinyl chloride. Examples of the olefin monomers include ethylene and propylene. Examples of the diene monomers include butadiene and chloroprene. Examples of the other vinyl monomers include vinyl ethers, vinyl ketones, and vinylpyrrolidones. Examples of the unsaturated carboxylic acids include (meth)acrylic acid, itaconic acid, fumaric acid, and maleic acid. Examples of the acrylamides include (meth)acrylamide and N,N'-dimethyl(meth)acrylamide.

Examples of the monomer having two or more unsaturated vinyl groups in the molecule include di(meth)acrylate, tri(meth)acrylate, tetra(meth)acrylate, hexadi(meth)acrylate, divinylbenzene, and methylenebis(meth)acrylamide.

Specific examples of the monomer having two or more unsaturated vinyl groups in the molecule include di(meth) acrylates such as polyethylene glycol di(meth)acrylate, triethylene glycol di(meth)acrylate, 1,3-butyleneglycol di(meth) acrylate, 1,6-butyleneglycol di(meth)acrylate, 1,6-hexanediol di(meth)acrylate, neopentylglycol di(meth)acrylate, 1,9-nonanediol di(meth)acrylate, polypropylene glycol di(meth)acrylate, 2,2'-bis(4-(meth)acryloxypropoxyphenyl)propane, and 2,2'-bis(4-(meth)acryloxydiethoxyphenyl)propane; tri(meth)acrylates such as trimethylolpropane tri(meth)acrylate, trimethylolethane tri(meth)acrylate, and tetramethylolmethane tri(meth)acrylate; tetra(meth)acrylates such as ditrimethylol tetra(meth)acrylate, tetramethylolmethane tetra(meth)acrylate, and pentaerythritol tetra(meth)acrylate; hexa(meth) acrylates such as dipentaerythritol hexa(meth)acrylate; methylene bis(meth)acrylamide; and divinylbenzene.

These monomers may be used alone or in combination of two or more.

From the viewpoint of enhancing the water dispersibility of the resin component and further enhancing the bundling property of the carbon fibers, the acrylic resin (C) is preferably blended in the form of an aqueous dispersion, such as an aqueous dispersion polymerized by an emulsion polymerization method or a self-emulsifying aqueous dispersion having a hydrophilic group in a molecular skeleton including a terminal.

(Urethane-based resin (D))

The urethane-based resin (D) is a polymer compound having a urethane bond in the main chain, and is typically a polymer compound obtained by the bonding of a polyisocyanate, a polyol, and optionally a chain extender.

Examples of the polyisocyanate include aromatic isocyanates such as tolylene diisocyanate, diphenylmethane diisocyanate, polymeric diphenylmethane diisocyanate, trizine diisocyanate, naphthalene diisocyanate, xylylene diisocyanate, and tetramethylxylylene diisocyanate, aliphatic isocyanates such as hexamethylene diisocyanate, trimethylhexamethylene diisocyanate, and isophorone diisocyanate, and alicyclic isocyanates.

Examples of the polyol include polyether-based polyols such as polyethylene glycol, polypropylene glycol, and polytetramethylene glycol, and polycarbonate-based polyols such as polyhexamethylene carbonate.

Examples of the chain extender include low-molecular-weight glycols such as ethylene glycol, and compounds with active hydrogen atoms such as low-molecular-weight diamines and low-molecular-weight amino alcohols.

These compounds may be used alone or in combination of two or more.

From the viewpoint of enhancing the water dispersibility of the resin component and further enhancing the bundling property of the carbon fibers, the urethane-based resin (D) is preferably blended in the form of an aqueous dispersion, such as a self-emulsifying aqueous dispersion having a hydrophilic group in a molecular skeleton including a terminal. Further, from the same viewpoint, it is preferable that the urethane-based resin (D) is selfcrosslinkable, capable of forming a crosslinked structure by the evaporation of moisture.

(Diene-based rubber (E))

The diene-based rubber (E) is a polymer rubber compound having a constituent unit derived from a diene-based monomer in the main chain. The diene-based rubber (E) preferably contains 10% by mass or more of a constituent unit derived from a diene-based monomer based on the total amount of all constituent units. Typically, the diene-based rubber (E) is a polymer compound obtained by polymerizing a diene-based monomer and optionally a monomer having an unsaturated vinyl group that can be copolymerized with the diene-based monomer.

Examples of the diene-based monomer include butadiene, isoprene, and chloroprene.

Examples of the monomer having an unsaturated vinyl group that can be copolymerized with a diene-based monomer include monofunctional monomers such as styrene, ethylene, acrylonitrile, and alkyl (meth)acrylates, and polyfunctional monomers such as divinylbenzene, ethylene glycol dimethacrylate, butylene glycol diacrylate, triallyl cyanurate, triallyl isocyanurate, trimethylolpropane triacrylate, and pentaerythritol tetraacrylate.

From the viewpoint of enhancing the water dispersibility of the resin component and further enhancing the bundling property of the carbon fibers, the diene-based rubber (E) is preferably blended in the form of an aqueous dispersion. For example, the diene-based rubber (E) can be dispersed in water using an emulsifier component such as a surfactant.

(Relationship between First Resin Component and Second Resin Component)

The second resin component is preferably compatible with the first resin component. When these components are compatible, it is possible to more efficiently reduce the generation of fuzz from the cut end surface and to further enhance the ILSS of a laminate obtained by fusing and laminating UD sheets that are produced by using bundled carbon fibers.

In the present specification, the term "a plurality of types of resin components are compatible" means that, when these resin components are mixed by heating to a temperature 10°C higher than the melting point (or the glass transition temperature when no melting point is observed) of all the resins and then cooled to 25°C, a single phase is formed visually. When these resin components include a component having a melting point (or glass transition temperature) of 0°C or lower, the term means that a single phase is formed visually when these resin components are mixed at 10°C.

The ratio of the first resin component to the second resin component on a mass basis (first resin component / second resin component) is preferably 10/90 or more and 90/10 or less, more preferably 20/80 or more and 85/15 or less, and even more preferably 30/70 or more and 80/20 or less. By increasing the amount of the first resin component, it is possible to more efficiently reduce the generation of fuzz from the cut end surface. By increasing the amount of the second resin component, the bundling property is further improved, and the ILSS of a laminate obtained by fusing and laminating UD sheets that are produced by using bundled carbon fibers can be further enhanced.

1-2. Composition of Aqueous Dispersion

The aqueous dispersion is formed by dispersing the resin component described above in water.

The proportion of the total mass of the resin component with respect to the total mass of the aqueous dispersion is 0.01% by mass or more and 50% by mass or less. By increasing the proportion of the resin component, it is possible to further enhance the dispersion stability of the aqueous dispersion. By not making the proportion of the resin component excessive, it is possible to easily control the degree of adhesion of the resin component to carbon fibers. For example, when storing an aqueous dispersion, the proportion of the resin component is preferably 10% by mass or more and 50% by mass or less, more preferably 15% by mass or more and 45% by mass or less, and even more preferably 20% by mass or more and 40% by mass or less. On the other hand, when adhering the resin to carbon fibers, it is preferable to dilute the resin with water so that the proportion of the resin component becomes 0.01% by mass or more and 20% by mass or less, more preferably 0.05% by mass or more and 10% by mass or less, and further preferably 0.1% by mass or more and 5% by mass or less.

The proportion of the total mass of water with respect to the total mass of the aqueous dispersion is 50% by mass or more and 99.99% by mass or less. When storing the aqueous dispersion, the proportion of the water is preferably 50% by mass or more and 90% by mass or less, more preferably 55% by mass or more and 85% by mass or less, and still more preferably 60% by mass or more and 80% by mass or less. When adhering the resin to carbon fibers, the proportion of the water is preferably 80% by mass or more and 99.99% by mass or less, more preferably 90% by mass or more and 99.95% by mass or less, and further preferably 95% by mass or more and 99.9% by mass or less.

The aqueous dispersion preferably has a total content of water and the resin component of 60% by mass or more and 99% by mass or less, more preferably 70% by mass or more and 95% by mass or less, and further preferably 80% by mass or more and 95% by mass or less, based on the total mass of the aqueous dispersion, from the viewpoint of the dispersion stability of the aqueous dispersion.

The aqueous dispersion may further include other components such as a surfactant, a pH adjuster, and/or an organic solvent, in addition to the resin component and water.

From the viewpoint of the dispersion stability of the aqueous dispersion, the content of the above other components is preferably 1% by mass or more and 40% by mass or less, more preferably 5% by mass or more and 30% by mass or less, and still more preferably 5% by mass or more and 20% by mass or less, based on the total mass of the aqueous dispersion.

The aqueous dispersion can be prepared by mixing the above components. At the time of preparation, it is preferable to mix a resin component that has been dispersed in water in advance and water at an amount such that the proportion of the resin component falls within a predetermined range.

2. Carbon Fiber Bundle

Another embodiment of the present invention relates to a carbon fiber bundle bundled with the above-described resin component as a bundling agent. This carbon fiber bundle is used in the production of a fiber-reinforced resin (unidirectional material) in which carbon fibers are oriented in one direction.

Specifically, in the carbon fiber bundle, a plurality of carbon fibers are bundled by a bundling agent (which is a resin component adhered to the carbon fibers), and the resin component includes the ethylene/$\alpha$-olefin copolymer (A) or the acid-modified product (B) thereof described above. Further, the resin component satisfies the above-described requirement (I) or (II).

(I) Storage elastic modulus at 25°C is 100 MPa or more and 100,000 MPa or less.
(II) The resin component further includes an acrylic resin (C), a urethane-based resin (D), or diene-based rubber (E).

The amount of the resin component adhering to the carbon fibers is preferably 0.1% by mass or more and 5.0% by mass or less based on the total mass of the carbon fibers, more preferably 0.2% by mass or more and 3.0% by mass or less, further preferably 0.2% by mass or more and 2.0% by mass or less, and particularly preferably 0.5% by mass or more and 1.5% by mass or less. When the adhesion amount is 0.1% by mass or more, the bundling property tends to be further improved. When the adhesion amount is 5.0% by mass or less, it is possible to further enhance the ILSS of a laminate obtained by fusing and laminating UD sheets that are produced by using bundled carbon fibers.

The type of carbon fiber is not particularly limited, but from the viewpoint of increasing the strength of the unidirectional material, a carbon fiber having high strength and a high elastic modulus is preferable. From the viewpoint of improving the mechanical properties and reducing the weight of the unidirectional material, PAN-based, pitch-based, and rayon-based carbon fibers are preferred. From the viewpoint of increasing both the strength and the elastic modulus of the obtained molded article, PAN-based carbon fibers are preferred.

The average fiber diameter of the carbon fibers is not particularly limited, but is preferably 1 $\mu$m or more and 20 $\mu$m or less, and more preferably 3 $\mu$m or more and 15 $\mu$m or less, from the viewpoint of enhancing both the mechanical properties and the surface appearance of the obtained molded article.

The number of single threads in the carbon fiber bundle is not particularly limited, but is usually 100 to 350,000, preferably 1,000 to 250,000, and more preferably 5,000 to 220,000. The above aqueous dispersion exhibits an excellent effect even when used in a fiber bundle (large tow) having 40,000 or more fibers.

The carbon fiber bundle can be produced by applying the above-described aqueous dispersion to carbon fibers and drying the carbon fibers. From the viewpoint of uniformly adhering the resin component between single fibers, the aqueous dispersion is preferably applied by a roller immersion method, a roller transfer method, a spray method, or the like.

3. Unidirectional Material

Another embodiment of the present invention relates to a unidirectional material in which the above carbon fiber bundle is impregnated with a resin.

The unidirectional material may be in a thin film shape (UD sheet) or in a pellet shape.

The above resin (matrix resin) may be a thermoplastic resin or a thermosetting resin. Further, the above resin may be a crystalline resin or a non-crystalline resin.

Examples of the thermoplastic resin include polyolefin resins such as polyethylene, polypropylene, polybutene, and poly-4-methyl-1-pentene, polyamide resins, polyester resins, polystyrene resins, thermoplastic polyimide resins, polyamide-imide resins, polycarbonate resins, polyphenylene ether resins, polyphenylene sulfide resins, polyacetal resins, acrylic resins, polyetherimide resins, polysulfone resins, polyether ketone resins, polyether ether ketone resins, polyarylate resins, polyether nitrile resins, vinyl chloride resins, ABS resins, and fluororesins.

Examples of the thermosetting resin include epoxy resins, phenol resins, melamine resins, urea resins, diallyl phthalate resins, silicone resins, urethane resins, furan resins, ketone resins, xylene resins, thermosetting polyimide resins, unsaturated polyester resins, and diallyl terephthalate resins.

Of these, a thermoplastic resin is preferable from the viewpoint of further enhancing the moldability of the unidirectional material. Further, among the thermoplastic resins, polyamide resins and polyolefin resins are preferred, and from the viewpoint of enabling molding at a lower temperature and further increasing production efficiency, polyolefin resins are more preferred, and from the viewpoint of making the resin lightweight, increasing rigidity, reducing water absorption, and further increasing chemical resistance and chemical stability, polypropylene is even more preferred.

The resin may be a resin composition including an additive. Examples of the additive include known fillers (inorganic fillers and organic fillers), pigments, dyes, weatherresistant stabilizers, heat-resistant stabilizers, antistatic agents, anti-slip agents, antioxidants, anti-mold agents, antibacterial agents, flame retardants, and softeners. For example, when the unidirectional materials are fused to each other or to another member by laser irradiation, the resin is preferably a resin composition containing a dye that absorbs a laser of the wavelength to be irradiated. Any dye that absorbs light with a wavelength of 300 nm or more and 3,000 nm or less may be used, and carbon black is preferred.

When the sum of the total mass of the carbon fiber bundle and the total mass of the matrix resin is 100 parts by mass, the content of the carbon fiber bundle is preferably 1 part by mass or more and 80 parts by mass or less, more preferably 30 parts by mass or more and 75 parts by mass or less, further preferably 30 parts by mass or more and 60 parts by mass or less, and particularly preferably 35 parts by mass or more and 60 parts by mass or less.

When the sum of the total mass of the carbon fiber bundle and the total mass of the matrix resin is 100 parts by mass, the content of the matrix resin is preferably 20 parts by mass or more and 99 parts by mass or less, more preferably 25 parts by mass or more and 70 parts by mass or less, further preferably 35 parts by mass or more and 70 parts by mass or less, and particularly preferably 40 parts by mass or more and 65 parts by mass or less.

The thickness of the unidirectional material is usually 1 to 500 $\mu$m. The unidirectional material can be produced, for example, by aligning opened carbon fiber bundle, bringing the carbon fiber bundle into contact with the resin that has been made flowable by melting or the like.

The unidirectional material can be used as it is, or can be used as a laminate in which a plurality of unidirectional materials are laminated and integrated. The thickness of the unidirectional material is preferably 1 to 500 $\mu$m, more preferably 5 to 400 $\mu$m, particularly preferably 10 to 300 $\mu$m, and most preferably 10 to 250 $\mu$m. The sheet-shaped or tape-shaped unidirectional materials may be laminated by a method such as a press molding method, a stamp molding method, or a tape winding molding method to adjust the thickness of the unidirectional materials.

The unidirectional material according to the present embodiment can efficiently reduce the generation of fuzz from the cut end surface when cut into a tape shape. Therefore it is preferable to use the unidirectional material in the form of a tape.

The tape-shaped unidirectional material is useful, for example, as a material for tape winding molding. In the tape winding molding, the tape-shaped unidirectional material is brought into contact with the mandrel, and the unidirectional material (using a thermoplastic resin as the resin) is fused by laser irradiation. Fusion may be performed by heating instead of using a laser.

The unidirectional material according to the present embodiment is suitable for use in automotive components, electrical and electronic components, and household and office electrical product components. Further, the tape-shaped unidirectional material can be suitably used for an external reinforcement section of various containers such as pipes and pressure vessels.

Examples

The present invention will be described in detail based on Examples, but the present invention is not limited to these Examples.

1. Preparation of Materials

1-1. Preparation of Material for Bundling Agent

The bundling agent was prepared by the following method.

The physical properties of the ethylene/$\alpha$-olefin copolymer (A) and the acid-modified product (B) were measured by the following methods.

(1) Content ratio of constitutional units derived from ethylene (mol%)

Using a Fourier transform infrared spectrophotometer FT/IR-610 or FT/IR-6100 manufactured by JASCO Corporation, the absorbance ratio (D1155 cm$^{-1}$/D721 cm$^{-1}$) of the absorption near 721 cm$^{-1}$ based on the lateral vibration of a long-chain methylene group and the absorption near 1155 cm$^{-1}$ based on the skeletal vibration of propylene was calculated, and the content ratio (% by mass) of the constitutional unit derived from ethylene was determined from a calibration curve (created using a standard sample in ASTM D3900) prepared in advance. Next, the content ratio (% by mass) of the constitutional unit derived from the obtained ethylene was converted to the content ratio (mol%) of the constitutional unit derived from ethylene according to the following equation.

[Expression 3]

$$\text{Content ratio of ethylene unit (mol\%)} = \frac{[\text{Content ratio of ethylene unit (\% by mass)} \div 28]}{[\text{Content ratio of ethylene unit (\% by mass)} \div 28] + [\text{Content ratio of propylene unit (\% by mass)} \div 42]}$$

(2) Viscosity Characteristics

The kinematic viscosity at 100°C was measured and calculated in accordance with JIS K2283 (2000). The apparent viscosity (Brookfield viscosity) at 150°C was measured and calculated in accordance with JIS K7117-1 (1999).

(3) Weight average molecular weight (Mw) and molecular weight distribution (Mw/Mn)

The weight average molecular weight (Mw) and the molecular weight distribution (Mw/Mn) were measured using HLC-8320GPC manufactured by Tosoh Corporation. As the separation column, TSKgel SuperMultipore HZ-M (4 columns) was used, the column temperature was set to 40°C, tetrahydrofuran (manufactured by Wako Pure Chemical Industries, Ltd.) was used as the mobile phase, the development rate was set to 0.35 ml/min, the sample concentration was set to 5.5 g/L, the sample injection amount was set to 20 microliters, and a differential refractometer was used as the detector. As the standard polystyrene, PS tQuick MP-M manufactured by Tosoh Corporation was used. In accordance with the procedure for general-purpose calibration, the weight average molecular weight (Mw) and the number average molecular weight (Mn) were calculated as polystyrene molecular weight equivalents (in terms of polystyrene molecular weight), and the molecular weight distribution (Mw/Mn) was calculated from these values.

(4) B Value

With o-dichlorobenzene/benzene-d6 (4/1 [vol/vol%]) as a measurement solvent, $^{13}$C-NMR spectrum was measured under the measurement conditions of a measurement temperature of 120°C, a spectral width of 250 ppm, a pulse repetition time of 5.5 seconds, and a pulse width of 4.7 seconds (45° pulse) (100 MHz, ECX400P manufactured by JEOL Ltd.) or under the measurement conditions of a measurement temperature of 120°C, a spectral width of 250 ppm, a pulse repetition time of 5.5 seconds, and a pulse width of 5.0 seconds (45° pulse) (125 MHz, Bruker BioSpin AVANCEIIIcryo-500). The B value was then calculated based on the following equation [1]. Peak assignment was performed with reference to the known literature described above.
[Expression 4]

$$B = \frac{P_{OE}}{2P_O \cdot P_E} \quad \cdots [1]$$

In equation [1], $P_E$ represents the content ratio (mol%) of a constitutional unit derived from ethylene, $P_O$ represents the content ratio (mol%) of an α-olefin unit, and $P_{OE}$ represents the content ratio (mol%) of an ethylene-α-olefin chain in all dyad chains.

(5) Unsaturated Bond Content

With o-dichlorobenzene-d4 as the measurement solvent, $^1$H-NMR spectrum (400 MHz, ECX400P manufactured by JEOL Ltd.) was measured under the measurement conditions of a measurement temperature of 120°C, a spectral width of 20 ppm, a pulse repetition time of 7.0 seconds, and a pulse width of 6.15 $\mu$sec (45° pulse). The solvent peak (ortho-dichlorobenzene 7.1 ppm) was used as the chemical shift standard, and the unsaturated bond content per 1000 carbon atoms (number/1000C) was calculated from the ratio of the integral value of the main peak observed at 0 to 3 ppm to the peak derived from the unsaturated bond observed at 4 to 6 ppm.

(6) Melting point

Using X-DSC-7000 manufactured by Seiko Instruments Inc., a sample of approximately 8 mg of a copolymer was placed in a simply sealable aluminum sample pan and then disposed in the DSC cell which was then heated from room temperature to 150°C at a rate of 10°C/min under the nitrogen atmosphere, held at 150°C for 5 minutes, and subsequently decreased at a rate of 10°C/min, subsequently, the DSC cell was cooled to - 100°C (cooling step). Subsequently, the temperature was maintained at -100°C for 5 minutes, then increased to 150°C at a rate of 10°C/min. The temperature at which the enthalpy curve obtained during the heating process exhibited a maximum value was defined as the melting point (Tm), and the total endothermic quantity associated with melting was defined as the melting enthalpy ($\Delta$H). In the above range, when no peak is observed or the value of the melting enthalpy ($\Delta$H) is 1 J/g or less, the melting point (Tm) is considered not to be observed. The melting point (Tm) and the melting enthalpy ($\Delta$H) were determined in accordance with JIS K7121 (2012).

(7) Acid value

A sample was accurately weighed and dissolved in a mixed solvent of mixed xylene and n-butanol in a mass ratio of 1:1 to obtain a sample solution. Next, the sample solution was titrated with a previously standardized alcohol solution of N/10 potassium hydroxide (that is, 5 g of ion-exchanged water added to 7 g of special grade potassium hydroxide, made up to 1 L with primary ethyl alcohol, and standardized with N/10 hydrochloric acid and 1% phenolphthalein solution to a titer of F), and the acid value was calculated from the neutralization amount according to the following equation.

$$\text{Acid value (mgKOH/g)} = (\text{N/10 KOH titration (ml)} \times F \times 5.61)/(\text{Sample (g)} \times 0.01)$$

1-1-1. Synthesis of Ethylene/$\alpha$-Olefin Copolymer (A)

A stainless steel autoclave with an internal volume of 2 L that had been thoroughly purged with nitrogen was charged with 760 mL of heptane and 120 g of propylene, and the temperature in the system was increased to 150°C. Subsequently, hydrogen at 0.85 MPa and ethylene at 0.19 MPa were supplied, resulting in a total pressure of 3 MPaG. Next, 0.4 mmol of triisobutylaluminum, 0.0002 mmol of [methylphenylmethylene($\eta$5-cyclopentadienyl)($\eta$5-2,7-di-tert-butylfluorenyl)]zirconium dichloride, and 0.002 mmol of N,N-dimethylanilinium tetrakis(pentafluorophenyl)borate were injected with nitrogen, and the polymerization was initiated by setting the stirring rotation speed to 400 rpm. Subsequently, the total pressure was maintained at 3 MPaG by continuously supplying only ethylene, and polymerization was performed at 150°C for 5 minutes. After stopping the polymerization by adding a small amount of ethanol to the system, unreacted ethylene, propylene, and hydrogen were purged. The obtained polymerization solution was washed three times with 1000 mL of 0.2 mol/L hydrochloric acid, then three times with 1000 mL of distilled water, dried with magnesium sulfate, and the solvent was removed under reduced pressure to obtain a crude ethylene-propylene copolymer.

A stainless steel autoclave with an internal volume of 1L was charged with 100 mL of a hexane solution of a Pd/alumina catalyst (concentration of 0.5% by mass) and 500 mL of a hexane solution of the above-obtained crude ethylene-propylene copolymer (concentration of 30% by mass), and the autoclave was sealed and purged with nitrogen. Subsequently, the temperature was increased to 140°C while stirring, the system was replaced with hydrogen, and the pressure was increased to 1.5 MPa with hydrogen, followed by a hydrogenation reaction for 15 minutes. After filtering the reaction solution to filter the hydrogenation catalyst, the solvent was removed under reduced pressure, and drying was performed at 80°C under reduced pressure for 24 hours to obtain ethylene-propylene copolymer (A). Regarding the obtained ethylene-propylene copolymer (A), the content ratio of a constitutional unit derived from ethylene was 48.5 mol%, the weight average molecular weight (Mw) was 5,165, the molecular weight distribution (Mw/Mn) was 1.7, the B value was 1.2, the kinematic viscosity at 100°C was 152 mm$^2$/s, the unsaturated bond content was less than 0.1/1000C, the chlorine content was less than 0.1 ppm, and the melting point (melting peak) was not observed.

1-1-2. Preparation of Aqueous Dispersion of Acid-Modified Product (B)

A 200 mL glass reactor with a stirrer equipped with a nitrogen blowing pipe, a watercooled condenser, a thermometer, and two dropping funnels was charged with 100 g of the obtained ethylene-propylene copolymer (A). After increasing the temperature, nitrogen bubbling was started at 120°C, and the system was maintained at 160°C. Subsequently, 6.6 g of maleic anhydride (preheated to around 70°C to be in a liquid state) and 1.3 g of di-tert-butyl peroxide, which were respectively prepared in advance in two dropping funnels, were supplied over 5 hours, and the reaction was allowed to proceed for 1 hour after the supply was completed. Next, the temperature in the system was increased to 175°C, and after the pressure inside the system was reduced, the pressure was reduced for 1 hour while gradually ventilating nitrogen with a vacuum pump to remove impurities (unreacted maleic anhydride and decomposition products of di-tert-butyl peroxide). Through the above operations, an acid-modified product (B) of the ethylene-propylene copolymer was obtained. Regarding the obtained acid-modified product (B), the weight average molecular weight (Mw) was 7,170, the molecular weight distribution (Mw/Mn) was 1.8, the apparent viscosity (Brookfield viscosity) at 150°C was 71 cPs, the acid value was 60 mgKOH/g, and the melting point (melting peak) was not observed.

To 100 parts by mass of the above-obtained acid-modified product (B), 25 parts by mass of a surfactant (polyoxyethylene alkyl ether, HLB value is 13.5) was added, and the mixture was kneaded at 80°C. Subsequently, 10 parts by mass of morpholine and 280 parts by mass of distilled water were added to this mixture, and the mixture was stirred at 80°C and 12,000 rpm with a homomixer to obtain an aqueous dispersion of the acid-modified product (B). The solid content concentration of the obtained acid-modified product (B) was 30% by mass.

1-1-3. Preparation of Aqueous Dispersion of Polypropylene-Based Resin

In this step, 96 parts by mass of a propylene-butene copolymer, 4 parts by mass of maleic anhydride, and 0.4 parts by mass of a polymerization initiator (Perhexyne 25B, manufactured by NOF Corporation,) were mixed, and the mixture was subjected to modification at a heating temperature of 160°C for 2 hours to obtain an acid-modified product of the propylene-butene copolymer. Regarding the obtained acid-modified product, the weight average molecular weight (Mw) was 20,000, the acid value was 45 mgKOH/g, the maleic anhydride content ratio was 4% by mass, and the melting point was 140°C.

Next, 100 parts by mass of a propylene-butene copolymer having a Shore D hardness of 52 and a weight average molecular weight (Mw) of 350,000, 10 parts by mass of the obtained acid-modified product, and 3 parts by mass of potassium oleate as a surfactant were mixed. This mixture was supplied at a rate of 3000 g/hour from the hopper of a twinscrew extruder (manufactured by Ikegai Corporation, PCM-30, L/D = 40), and a 20% aqueous solution of potassium hydroxide was continuously supplied at a rate of 90 g/hour from a supply port provided in the vent section of the extruder, and the mixture was continuously extruded at a heating temperature of 210°C. The extruded resin mixture was cooled to 110°C with a jacketed static mixer installed at the outlet of the extruder, and then further poured into hot water at 80°C to obtain an aqueous dispersion (emulsion) of a polypropylene-based resin. The solid content concentration of the obtained aqueous dispersion was 45% by mass.

1-1-4. Preparation of Aqueous Dispersion of Acrylic Resin (C)

An emulsion was obtained by adding 20 g of acrylamide, 50 g of acrylonitrile, 450 g of n-butyl acrylate, 450 g of 2-ethylhexyl acrylate, 20 g of methacrylic acid, and 10 g of divinylbenzene to 400 g of ion-exchanged water and 3 g of sodium dodecyldiphenyl ether disulfonate under stirring.

A reaction vessel equipped with a stirrer, a reflux condenser, a dropping device, and a thermometer was charged with 550 g of ion-exchanged water and 1 g of sodium dodecyldiphenyl ether disulfonate, and the temperature was increased to 72°C under stirring while purged with nitrogen. The internal temperature was maintained at 72°C, and 5 g of potassium persulfate was added as a polymerization initiator. After dissolving the potassium persulfate, the emulsion was continuously added dropwise into the reaction solution over a period of 4 hours while maintaining the internal temperature at 72°C. After the dropping was completed, the mixture was aged for 2 hours. After cooling the obtained aqueous emulsion to room temperature, ion-exchanged water and an ammonium aqueous solution were added to adjust the solid content to 50% by weight and the pH to 7.5, thereby obtaining an aqueous dispersion of an acrylic resin (C1).

An acrylic resin (C2) to an acrylic resin (C5) were obtained in the same manner as the synthesis of the acrylic resin (C1), except that the ratios of the monomers and t-dodecylmercaptan as a chain transfer agent added during the production of the emulsion were changed to the ratios described in Table 1. The ratio of each monomer described in Table 1 represents the mass ratio (% by mass) based on the total amount of monomers.

[Table 1]

| Acrylic resin | (C1) | (C2) | (C3) | (C4) | (C5) |
|---|---|---|---|---|---|
| Styrene | - | - | - | 51.0 | 10.0 |
| Acrylonitrile | 5.0 | - | - | - | 22.0 |
| Methyl methacrylate | - | 20.0 | 35.0 | - | 10.0 |
| Ethyl acrylate | - | 10.0 | 10.0 | - | - |
| Butyl acrylate | 45.0 | 62.0 | 48.0 | - | 50.9 |
| 2-Ethylhexyl Acrylate | 45.0 | - | - | 42.0 | - |
| Methacrylic acid | 2.0 | - | 2.0 | 2.0 | 3.0 |
| Itaconic acid | - | 2.0 | - | - | - |
| Hydroxyethyl Methacrylate | - | 2.0 | 2.0 | 2.0 | 2.0 |

(continued)

| Acrylic resin | (C1) | (C2) | (C3) | (C4) | (C5) |
|---|---|---|---|---|---|
| Acrylamide | 2.0 | 2.0 | 1.5 | 2.0 | 2.0 |
| Divinylbenzene | 1.0 | 2.0 | 1.5 | - | - |
| Trimethylolpropane Trimet iacryiate | - | - | - | 1.0 | - |
| t-Dodecyl mercaptan | | - | - | - | 0.1 |
| Total | 100.0 | 100.0 | 100.0 | 100.0 | 100.0 |

1-1-5. Preparation of Aqueous Dispersion of Urethane-Based Resin (D)

The following urethane-based resins (all of which are aqueous dispersions with a solid content concentration of 30% by mass) were prepared.

    (D1): TAKELAC WS-6021 manufactured by Mitsui Chemicals, Inc.
    (D2): TAKELAC W-6110 manufactured by Mitsui Chemicals, Inc.

1-1-6. Preparation of Aqueous Dispersion of Diene-Based Rubber (E)

The following types of diene-based rubber (E) (all of which are aqueous dispersions with a solid content concentration of 50% by mass) were prepared.

    (E1): Nalstar SR-116 manufactured by Nippon A&L Inc.
    (E2): Nalstar MR-171 manufactured by Nippon A&L Inc.
    (E3): Siatex NA-106 manufactured by Nippon A&L Inc.

1-1-7. Preparation of Aqueous Dispersion of Epoxy Resin

A four-necked flask equipped with a stirrer, a thermometer, a reflux cooling device, and a nitrogen introduction pipe was charged with 60.0 g of diglyme and 100 g of bisphenol A type epoxy resin (Epomik R302, manufactured by Mitsui Chemicals, Inc.), and the mixture was stirred while being heated to 70°C, confirming that the epoxy resin was completely dissolved. To this solution, 7.0 g of monoethanolamine (mol number (B) of active hydrogen was= 0.23 mol) (ratio (A)/(B) of mol number (A) of epoxy groups to mol number (B) of active hydrogens in polyfunctional amine was 0.70) was added thereto, and the mixture was reacted at 100°C for 6 hours. Subsequently, the mixture was cooled to 70°C, 19.7 g of succinic anhydride was added, and the temperature was raised again to 95°C, where the reaction was allowed to proceed for 1 hour, resulting in a diglyme solution of an epoxy resin with a carboxyl group on the side chain of a polyfunctional amine-modified epoxy resin. The resin liquid was cooled to 60°C, 11.5 g of 29% aqueous ammonia was added, and the mixture was stirred for 30 minutes while maintaining the temperature at 60°C. Subsequently, 175.6 g of ion-exchanged water was added dropwise over 30 minutes. Subsequently, 6.3 parts by mass of an anionic surfactant (PELEX (registered trademark) OT-P, sodium dialkyl sulfosuccinate, manufactured by Kao Corporation) was added and mixed to obtain an aqueous dispersion (emulsion) of an epoxy resin. The solid content concentration of the obtained aqueous dispersion was 25% by mass.

1-2. Preparation of Carbon Fiber Bundle to which Bundling Agent is not adhered

A carbon fiber bundle (TC-35R (12K), 12,000 filaments, manufactured by Formosa Plastics Corporation,) to which a bundling agent was adhered was immersed in acetone, subjected to ultrasonic treatment for 10 minutes, then pulled up and washed three times with acetone, and dried at room temperature for 8 hours to remove the adhered sizing agent, resulting in a carbon fiber bundle to which bundling agent was not adhered.

2. Production of Carbon Fiber Bundle with adhered Bundling Agent

(Examples 1 to 12, Comparative Examples 13 to 17)

The above resin components (acid-modified product (B), polypropylene-based resin, acrylic resin (C), urethane-based resin (D), diene-based rubber (E), and/or epoxy resin) were dispersed in ion-exchanged water at the ratios shown in Tables 2 to 5 to obtain aqueous dispersion 1 to aqueous dispersion 17.

Each aqueous dispersion was allowed to adhere to the carbon fiber bundle, to which the bundling agent was not adhered, by using a roller impregnation method. Subsequently, the carbon fiber bundle was dried at 130°C for 2 minutes online to remove the low-boiling point component, resulting in a carbon fiber bundle with the bundling agent adhered thereto. The adhesion amount of the resin component of the bundling agent to the carbon fiber bundle measured by the method described below is shown in Tables 2 to 5.

3. Production of Unidirectional Material

Next, the carbon fiber bundle was opened and aligned using the apparatus described in FIG. 2 of WO2021/177158, and then brought into contact with a molten matrix resin coated on an impregnation roller and taken up to obtain a sheet-shaped unidirectional material (UD sheet). Specifically, first, polypropylene (manufactured by Prime Polymer Co., Ltd., trade name J108M, MFR (measured in accordance with ASTM D 1238, 230°C, load 2.16 kg) = 45 g/10 min) and maleic anhydride-modified polypropylene-based resin (manufactured by Mitsui Chemicals, Inc., trade name ADMER QE800, MFR (measured in accordance with ASTM D 1238, 230°C, load 2.16 kg) = 9.1 g/10 min) were blended at a mass ratio of 90/10, and were melt-mixed in an extruder having a T-die. Then, the resin was extruded and supplied from the T-die onto the peripheral surface of the rotating impregnation roller. The temperature of the extruder and the T-die was adjusted to 260°C, and the temperature of the impregnation roller was also adjusted to 260°C. The supply amount of the resin was adjusted such that the mass ratio of the carbon fiber bundle to the resin was 67/33.

4. Evaluation

The following measurements and evaluations were performed on the obtained bundling agents, the carbon fiber bundles to which the corresponding bundling agent was adhered, and the UD sheets.

4-1. Adhesion Amount of Resin Component of Bundling Agent to Carbon Fiber Bundle

Approximately 5 g of a carbon fiber bundle to which a bundling agent was adhered was collected, dried at 120°C for 3 hours, and the weight W1 (g) was measured. Next, the carbon fiber bundle was heated in a nitrogen atmosphere at 450°C for 15 minutes, then cooled to room temperature, and the weight W2 (g) was measured. The adhesion amount was calculated from W1 (g) and W2 (g) using the following equation.

$$\text{Adhesion amount} = [(W1 - W2)/W2] \times 100 \ (\% \text{ by mass})$$

4-2. Storage Elastic Modulus G' of Bundling Agent

The aqueous dispersion of each bundling agent was dried at 150°C for 30 minutes, and then cooled to obtain a dried body of the bundling agent. When the dried body was a solid, the dried body was further subjected to pressure compression at 120°C and 5 MPa for 3 minutes, and then immediately cooled while maintaining the pressurized state to create a sheet of the dried body. When the dried body is a liquid, the dried body was used as it is to form a sheet for viscoelasticity measurement.

The viscoelasticity of the liquid dried body or the sheet of the dried body was measured using a viscoelasticity measurement apparatus (ARES-G2, manufactured by TA Instruments, Inc.) at a measurement frequency of 1 Hz, a measurement temperature of 0°C to 150°C (measured from the high temperature side), a temperature increase rate of 3°C/min, and under nitrogen, and the storage elastic modulus G' at 25°C was obtained.

4-3. Compatibility

The dried body of the bundling agent obtained during the measurement of the storage elastic modulus was weighed to 1 g in an aluminum dish, and was heated to a temperature of 10°C higher than the highest temperature among the melting points and the glass transition temperatures of the two types of resins contained in the dried body. Subsequently, the mixture was stirred for 30 minutes, cooled to room temperature, and evaluated according to the following evaluation criteria. The melting point and the glass transition temperature of each resin were measured and determined by the method using the DSC described above.

-Evaluation Criteria-

o: No phase separation was observed visually
×: Phase separation was observed visually

4-4. Interlayer Shear Stress (ILSS)

The obtained UD sheets were laminated in 15 layers such that the orientation angle of the carbon fibers was the same, and the laminate was disposed in a press apparatus (NSF-37HHC, manufactured by Shindo Metal Industries Co., Ltd.) equipped with a flat plate mold. Then, the material was subjected to pressure compression at 180°C and 5 MPa for 3 minutes, followed by immediate cooling while maintaining the pressurized state to obtain a 2.0 mm-thick UD sheet laminate material.

Five test pieces (20 mm × 10 mm) were prepared by cutting the obtained UD sheet laminate material, and the interlaminar shear stress (ILSS) was measured in accordance with ASTM D2344 using a short-span bending test apparatus (Shimadzu Autograph AG-5KNX, manufactured by Shimadzu Corporation), and the average value was determined. The evaluation was performed according to the following evaluation criteria.

-Evaluation Criteria-

◎: ILSS was 25 MPa or more
○: ILSS was 20 MPa or more and less than 25 MPa
×: ILSS was less than 20 MPa

4-5. Bundling Property

The carbon fiber bundle to which a sizing agent was applied was cut into 10 cut samples having a length of 5 cm. The resistance amount (g) generated when each cut sample is pushed in was measured using a texture tester (HANDLE-O-METER, model HOM-2, slit width 10 mm, manufactured by DAIEI KAGAKU SEIKI MFG. CO., LTD), and the average value was obtained. The larger the resistance value (g), the better the bundling property. The evaluation was performed according to the following evaluation criteria.

-Evaluation Criteria-

○: The resistance amount was 10 g or more
×: The resistance amount was less than 10 g

4-6. Fuzz

An incision was made in the reinforced fiber bundle to which the bundling agent was adhered, and 10 mm from the end part along the fiber direction, the reinforced fiber bundle was torn by hand along the fiber direction. Then, the number of visible fuzz was counted in a region from the tip portion of the incision when tearing (that is, a position 10 mm from the end part) to a position 15 cm from the tip portion (that is, a position 16 cm from the end part). This operation was repeated three times, and the average value of the number of confirmed fuzz was defined as the number of fuzz generated in each reinforced fiber bundle. The number of fuzz generated in Comparative Example 1 was used as a reference, and the number of fuzz generated in each Example was evaluated based on the following criteria.

-Evaluation Criteria-

◎: The number of fuzz generated was less than 1/5 of that in Comparative Example 1
○: The number of fuzz generated was 1/5 or more and less than 1/2 of that in Comparative Example 1

×: The number of fuzz generated was 1/2 or more of that in Comparative Example 1

[Table 2]

| | | | | Unit | Example 1 | Example 2 | Example 3 | Example 4 |
|---|---|---|---|---|---|---|---|---|
| Test No. | | | | | 1 | 2 | 3 | 4 |
| Bundling Agent | Type | | Resin concentration | | | | | |
| | Aqueous dispersion of acid-modified product (B) | | 30 wt% | parts by mass | 1.7 | 3.3 | 0.8 | 0.8 |
| | Aqueous dispersion of polypropylene-based resin | | 45 wt% | parts by mass | | | | |
| | Aqueous dispersion of acrylic resin (C) | (C1) | 50 wt% | parts by mass | | | | |
| | | (C2) | | parts by mass | | | | |
| | | (C3) | | parts by mass | | | | |
| | | (C4) | | parts by mass | | | | |
| | | (C5) | | parts by mass | | | | |
| | Aqueous dispersion of urethane-based resin (D) | (D1) | 30 wt% | parts by mass | 1.7 | 3.3 | 0.8 | |
| | | (D2) | | parts by mass | | | | 0.8 |
| | Aqueous dispersion of diene-based rubber (E) | (E1) | 50 wt% | parts by mass | | | | |
| | | (E2) | | parts by mass | | | | |
| | | (E3) | | parts by mass | | | | |
| | Aqueous dispersion of epoxy resin | | 25 wt% | parts by mass | | | | |

(continued)

| | | | | Example 1 | Example 2 | Example 3 | Example 4 |
|---|---|---|---|---|---|---|---|
| | | | | **Test No.** | | | |
| | | | | 1 | 2 | 3 | 4 |
| | Type | Resin concentration | Unit | | | | |
| | Ion-exchanged water | | parts by mass | 96.6 | 93.4 | 98.4 | 98.4 |
| | Proportion of resin component in bundling agent | | wt% | 1.0 | 2.0 | 0.5 | 0.5 |
| Result of measurement and evaluation | G' of bundling agent dried body | | MPa | 17101 | 16854 | 17394 | 24821 |
| | Compatibility | | - | ○ | ○ | ○ | ○ |
| | Adhesion amount of bundling agent | | wt% | 0.68 | 1.63 | 0.31 | 0.30 |
| | Bundling property | | - | ○ | ○ | ○ | ○ |
| | Fuzz | | - | ◎ | ◎ | ○ | ◎ |
| | ILSS | | MPa | ◎ | ○ | ◎ | ○ |

[Table 3]

| | Test No. | Resin concentration | Unit | Example 5 | Example 6 | Example 7 | Example 8 | Example 9 |
|---|---|---|---|---|---|---|---|---|
| Bundling Agent | Aqueous dispersion of acid-modified product (B) | 30 wt% | Parts by mass | 0.8 | 0.8 | 0.8 | 0.8 | 0.8 |
| | Aqueous dispersion of polypropylene-based resin | 45 wt% | Parts by mass | | | | | |
| | Aqueous dispersion of acrylic resin (C) (C1) | 50 wt% | Parts by mass | 0.5 | | | | |
| | (C2) | | Parts by mass | | 0.5 | | | |
| | (C3) | | Parts by mass | | | 0.5 | | |
| | (C4) | | Parts by mass | | | | 0.5 | |
| | (C5) | | Parts by mass | | | | | 0.5 |
| | Aqueous dispersion of urethane-based resin (D) (D1) | 30 wt% | Parts by mass | | | | | |
| | (D2) | | Parts by mass | | | | | |
| | Aqueous dispersion of diene-based rubber (E) (E1) | 50 wt% | Parts by mass | | | | | |
| | (E2) | | Parts by mass | | | | | |
| | (E3) | | Parts by mass | | | | | |
| | Aqueous dispersion of epoxy resin | 25 wt% | Parts by mass | | | | | |
| | Ion-exchanged water | | | 98.7 | 98.7 | 98.7 | 98.7 | 98.7 |
| | Proportion of resin component in bundling agent | | wt% | 0.5 | 0.5 | 0.5 | 0.5 | 0.5 |

23

(continued)

| Test No. | | | | Example 5 | Example 6 | Example 7 | Example 8 | Example 9 |
|---|---|---|---|---|---|---|---|---|
| | | | Unit | | | | | |
| Result of measurement and evaluation | Resin concentration | G' of bundling agent dried body | MPa | 3118 | 4264 | 18838 | 14660 | 1312 |
| | | Compatibility | - | ○ | ○ | ○ | ○ | ○ |
| | | Adhesion amount of bundling agent | wt% | 0.34 | 0.34 | 0.56 | 0.56 | 0.45 |
| | | Bundling property | - | ○ | ○ | ○ | ○ | ○ |
| | | Fuzz | - | ○ | ○ | ○ | ○ | ○ |
| | | ILSS | MPa | ○ | ○ | ○ | ○ | ○ |

[Table 4]

| | | | | Example | Example | Example |
|---|---|---|---|---|---|---|
| Test No. | | | | 10 | 11 | 12 |
| Bundling Agent | Type | | Resin concentration | Unit | | | |
| | Aqueous dispersion of acid-modified product (B) | | 30 wt% | Parts by mass | 0.8 | 0.8 | 0.8 |
| | Aqueous dispersion of polypropylene-based resin | | 45 wt% | Parts by mass | | | |
| | Aqueous dispersion of acrylic resin (C) | (C1) | 50 wt% | Parts by mass | | | |
| | | (C2) | | Parts by mass | | | |
| | | (C3) | | Parts by mass | | | |
| | | (C4) | | Parts by mass | | | |
| | | (C5) | | Parts by mass | | | |
| | Aqueous dispersion of urethane-based resin (D) | (D1) | 30 wt% | Parts by mass | | | |
| | | (D2) | | Parts by mass | | | |
| | Aqueous dispersion of diene-based rubber (E) | (E1) | 50 wt% | Parts by mass | 0.5 | | |
| | | (E2) | | Parts by mass | | 0.5 | |
| | | (E3) | | Parts by mass | | | 0.5 |
| | Aqueous dispersion of epoxy resin | | 25 wt% | Parts by mass | | | |
| | Ion-exchanged water | | | | 98.7 | 98.7 | 98.7 |
| | Proportion of resin component in bundling agent | | | wt% | 0.5 | 0.5 | 0.5 |

(continued)

| Result of measurement and evaluation | | | | Example | Example | Example |
|---|---|---|---|---|---|---|
| Test No. | | | | 10 | 11 | 12 |
| | Type | Resin concentration | Unit | | | |
| | G' of bundling agent dried body | | MPa | 8937 | 39413 | 18713 |
| | Compatibility | | - | ○ | ○ | ○ |
| | Adhesion amount of bundling agent | | wt% | 0.26 | 0.51 | 0.42 |
| | Bundling property | | - | ○ | ○ | ○ |
| | Fuzz | | - | ○ | ○ | ○ |
| | ILSS | | MPa | ○ | ○ | ○ |

[Table 5]

| Test No. | Type | Resin concentration | Units | Comparative Example 13 | Comparative Example 14 | Comparative Example 15 | Comparative Example 16 | Comparative Example 17 |
|---|---|---|---|---|---|---|---|---|
| Bundling Agent | Aqueous dispersion of acid-modified product (B) | 30 wt% | Parts by mass | | 1.7 | 3.3 | 5 | 1.7 |
| | Aqueous dispersion of polypropylene-based resin | 45 wt% | Parts by mass | 2.2 | | | | |
| | Aqueous dispersion of acrylic resin (C) (C1) | 50 wt% | Parts by mass | | | | | |
| | (C2) | | Parts by mass | | | | | |
| | (C3) | | Parts by mass | | | | | |
| | (C4) | | Parts by mass | | | | | |
| | (C5) | | Parts by mass | | | | | |
| | Aqueous dispersion of urethane-based resin (D): (D1) | 30 wt% | Parts by mass | | | | | |
| | (D2) | | Parts by mass | | | | | |
| | Aqueous dispersion of diene-based rubber (E) (E1) | 50 wt% | Parts by mass | | | | | |
| | (E2) | | Parts by mass | | | | | |
| | (E3) | | Parts by mass | | | | | |
| | Aqueous dispersion of epoxy resin | 25 wt% | Parts by mass | | | | | 2 |
| | Ion-exchanged water | | Parts by mass | 97.8 | 98.3 | 96.7 | 95 | 96.3 |
| | Proportion of resin component in bundling agent | | wt% | 1.0 | 0.5 | 1.0 | 1.5 | 1.0 |

27

| | | | | Comparative Example | Comparative Example | Comparative Example | Comparative Example | Comparative Example |
|---|---|---|---|---|---|---|---|---|
| | | Test No. | | 13 | 14 | 15 | 16 | 17 |
| Result of mea-surement and evaluation | | Type | Resin concentration | Units | | | | |
| | | G' of bundling agent dried body | | MPa | 11312900 | 2.5 | 2.8 | 2.9 | 478331 |
| | | Compatibility | | - | Not evaluated | Not evaluated | | | × |
| | | Adhesion amount of bundling agent | | wt% | 1.29 | 0.38 | 0.68 | 1.56 | 0.62 |
| | | Bundling property | | - | ○ | × | × | ○ | ○ |
| | | Fuzz | | - | Reference | ○ | ○ | ○ | × |
| | | ILSS | | MPa | ◎ | ○ | ○ | × | × |

As is apparent from Tables 2 to 5, when a carbon fiber bundle is bundled using an aqueous dispersion containing an ethylene/α-olefin copolymer (A) or an acid-modified product (B) thereof and satisfying the following requirement (I) or (II), it is possible to enhance the ILSS of a laminate obtained by fusing and laminating UD sheets that are produced by using bundled carbon fibers, while reducing the generation of fuzz, and to further improve the bundling property of the carbon fibers.

(I) Storage elastic modulus at 25°C is 100 MPa or more and 100,000 MPa or less.
(II) The resin component further includes an acrylic resin (C), a urethane-based resin (D), or diene-based rubber (E).

The present application is entitled to and claims the benefit of Japanese Patent Application No. 2022-155348, filed on September 28, 2022, the disclosure of which including the specification and claims is incorporated herein by reference in its entirety.

Industrial Applicability

The aqueous dispersion of the present invention can enhance ILSS and bundling property while reducing the fuzz of a unidirectional material. For this reason, the present invention is expected to contribute to the development of various fields related to unidirectional materials by exploring the possibility of utilizing unidirectional materials for more diverse applications.

**Claims**

1. An aqueous dispersion in which a resin component is dispersed in water and which is used for bundling carbon fibers, the carbon fibers being used in production of a unidirectional material in which the carbon fibers oriented in one direction are impregnated with a resin, wherein:

   the resin component includes an ethylene/α-olefin copolymer (A) satisfying all of requirements (a1) to (a3) below or an acid-modified product (B) of the ethylene/α-olefin copolymer (A):

   (a1) a kinematic viscosity at 100°C is 10 $mm^2$/s or more and 5,000 $mm^2$/s or less,
   (a2) a content ratio of a constitutional unit derived from ethylene is 30 mol% or more and 85 mol% or less, and
   (a3) a molecular weight distribution (Mw/Mn) of a molecular weight measured by gel permeation chromatography (GPC) and obtained in terms of polystyrene is 2.5 or less;

   a storage elastic modulus of the resin component at 25°C is 100 MPa or more and 100,000 MPa or less; and
   a proportion of a total mass of the resin component with respect to a total mass of the aqueous dispersion is 0.01% by mass or more and 50% by mass or less.

2. An aqueous dispersion in which a resin component is dispersed in water and which is used for bundling carbon fibers, the carbon fibers being used in production of a unidirectional material in which the carbon fibers oriented in one direction are impregnated with a resin, wherein:

   the resin component includes

   a first resin component that is an ethylene/α-olefin copolymer (A) satisfying all of requirements (a1) to (a3) below or an acid-modified product (B) of the ethylene/α-olefin copolymer (A):

   (a1) a kinematic viscosity at 100°C is 10 $mm^2$/s or more and 5,000 $mm^2$/s or less,
   (a2) a content ratio of a constitutional unit derived from ethylene is 30 mol% or more and 85 mol% or less, and
   (a3) a molecular weight distribution (Mw/Mn) measured by gel permeation chromatography (GPC) and obtained in terms of polystyrene is 2.5 or less, and

   a second resin component that is at least one resin selected from the group consisting of an acrylic resin (C), a urethane-based resin (D), and diene-based rubber (E); and

   a proportion of a total mass of the resin component with respect to a total mass of the aqueous dispersion is 0.01% by mass or more and 50% by mass or less.

3. The aqueous dispersion according to claim 2, wherein
the second resin component is compatible with the first resin component.

4. The aqueous dispersion according to any one of claims 1 to 3, wherein:
the ethylene/$\alpha$-olefin copolymer (A) satisfies at least one of requirements (a4) to (a7) below:

(a4) a weight average molecular weight (Mw) measured by the gel permeation chromatography (GPC) and obtained in terms of polystyrene is 1,000 or more and 50,000 or less,
(a5) a B value represented by equation [1] is 1.1 or more:
[Expression 1]

$$B = \frac{P_{OE}}{2P_O \cdot P_E} \quad \cdots [1]$$

[in equation [1], $P_E$ represents the content ratio (mol%) of the constitutional unit derived from ethylene, $P_O$ represents a content ratio (mol%) of a constitutional unit derived from an $\alpha$-olefin, and $P_{OE}$ represents a content ratio (mol%) of an ethylene-$\alpha$-olefin chain in all dyad chains],
(a6) an unsaturated bond content measured by $^1$H-NMR is less than 0.5 per 1,000 carbon atoms, and
(a7) a melting point is not observed.

5. The aqueous dispersion according to any one of claims 1 to 4, wherein:
the acid-modified product (B) satisfies at least one of requirements (b1) to (b4) below:

(b1) an acid value is 1 mgKOH/g or more and 300 mgKOH/g or less,
(b2) an apparent viscosity at 150°C is 1 cPs or more and 1,000 cPs or less,
(b3) a weight average molecular weight (Mw) measured by the gel permeation chromatography (GPC) and obtained in terms of polystyrene is 1,000 or more and 50,000 or less, and
(b4) a molecular weight distribution (Mw/Mn) measured by the gel permeation chromatography (GPC) and obtained in terms of polystyrene is 2.5 or less.

6. The aqueous dispersion according to any one of claims 1 to 5, wherein:
the acid-modified product (B) is an acid-modified product of the ethylene/$\alpha$-olefin copolymer (A) with maleic acid or maleic anhydride.

7. A carbon fiber bundle in which carbon fibers are bundled, the carbon fibers being used in production of a unidirectional material in which the carbon fibers oriented in one direction are impregnated with a resin, wherein:

the carbon fibers are bundled by a bundling agent adhered to the carbon fibers;
the bundling agent includes an ethylene/$\alpha$-olefin copolymer (A) satisfying all of requirements (a1) to (a3) below or an acid-modified product (B) of the ethylene/$\alpha$-olefin copolymer (A):

(a1) a kinematic viscosity at 100°C is 10 mm$^2$/s or more and 5,000 mm$^2$/s or less,
(a2) a content ratio of a constitutional unit derived from ethylene is 30 mol% or more and 85 mol% or less, and
(a3) a molecular weight distribution (Mw/Mn) of a molecular weight measured by gel permeation chromatography (GPC) and obtained in terms of polystyrene is 2.5 or less;

and
a storage elastic modulus of a resin component of the bundling agent at 25°C is 100 MPa or more and 100,000 MPa or less, the bundling agent including the ethylene/$\alpha$-olefin copolymer (A) or the acid-modified product (B) thereof.

8. A carbon fiber bundle in which carbon fibers are bundled, the carbon fibers being used in production of a unidirectional material in which the carbon fibers oriented in one direction are impregnated with a resin, wherein:

the carbon fibers are bundled by a bundling agent adhered to the carbon fibers; and
the bundling agent includes

a first resin component that is an ethylene/$\alpha$-olefin copolymer (A) satisfying all of requirements (a1) to (a3) below or an acid-modified product (B) of the ethylene/$\alpha$-olefin copolymer (A):

(a1) a kinematic viscosity at 100°C is 10 mm$^2$/s or more and 5,000 mm$^2$/s or less,
(a2) a content ratio of a constitutional unit derived from ethylene is 30 mol% or more and 85 mol% or less, and
(a3) a molecular weight distribution (Mw/Mn) of a molecular weight measured by gel permeation chromatography (GPC) and obtained in terms of polystyrene is 2.5 or less, and

a second resin component that is at least one resin selected from the group consisting of an acrylic resin (C), a urethane-based resin (D), and diene-based rubber (E).

9. The carbon fiber bundle according to claim 7 or 8, wherein the acid-modified product (B) is an acid-modified product of the ethylene/$\alpha$-olefin copolymer (A) with maleic acid or maleic anhydride.

10. The carbon fiber bundle according to any one of claims 7 to 9, wherein a proportion of a total mass of the resin component or a total mass of the first resin component and the second resin component with respect to a total mass of the carbon fiber bundle is 0.1% by mass or more and 5.0% by mass or less.

11. A unidirectional material comprising:

the carbon fiber bundle according to claim 7 or 8, the carbon fiber bundle being oriented in one direction; and
a matrix resin with which the carbon fiber bundle is impregnated, the matrix resin being a thermoplastic resin, wherein
when a sum of a total mass of the carbon fiber bundle and a total mass of the matrix resin is 100 parts by mass,

a content of the carbon fiber bundle is 1 part by mass or more and 80 parts by mass or less, and
a content of the matrix resin is 20 parts by mass or more and 99 parts by mass or less.

12. The unidirectional material according to claim 11, wherein the unidirectional material has a thin film shape.

13. The unidirectional material according to claim 11, wherein the unidirectional material has a pellet shape.

## INTERNATIONAL SEARCH REPORT

| International application No. |
| --- |
| **PCT/JP2023/034807** |

### A. CLASSIFICATION OF SUBJECT MATTER

*D06M 15/227*(2006.01)i; *B29B 11/16*(2006.01)i; *C08C 19/28*(2006.01)i; *C08F 210/02*(2006.01)i; *C08K 9/08*(2006.01)i; *C08L 9/00*(2006.01)i; *C08L 23/08*(2006.01)i; *C08L 23/26*(2006.01)i; *C08L 33/04*(2006.01)i; *C08L 75/04*(2006.01)i; *C08L 101/00*(2006.01)i; *D06M 15/263*(2006.01)i; *D06M 15/564*(2006.01)i; *D06M 15/693*(2006.01)i; *D06M 101/40*(2006.01)n

FI: D06M15/227; B29B11/16; C08C19/28; C08F210/02; C08K9/08; C08L9/00; C08L23/08; C08L23/26; C08L33/04; C08L75/04; C08L101/00; D06M15/263; D06M15/564; D06M15/693; D06M101:40

According to International Patent Classification (IPC) or to both national classification and IPC

### B. FIELDS SEARCHED

Minimum documentation searched (classification system followed by classification symbols)

D06M15/227; B29B11/16; C08C19/28; C08F210/02; C08K9/08; C08L9/00; C08L23/08; C08L23/26; C08L33/04; C08L75/04; C08L101/00; D06M15/263; D06M15/564; D06M15/693; D06M101/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2022-88914 A (MITSUI CHEMICALS, INC.) 15 June 2022 (2022-06-15)<br>entire text | 1-13 |
| A | WO 2022/009796 A1 (TEIJIN LTD.) 13 January 2022 (2022-01-13)<br>entire text | 1-13 |
| A | WO 2010/074118 A1 (MITSUI CHEMICALS, INC.) 01 July 2010 (2010-07-01)<br>entire text | 1-13 |
| A | JP 2005-48343 A (MITSUBISHI RAYON CO., LTD.) 24 February 2005 (2005-02-24)<br>entire text | 1-13 |
| A | JP 2016-6245 A (UNITIKA LTD.) 14 January 2016 (2016-01-14)<br>entire text | 1-13 |

☑ Further documents are listed in the continuation of Box C.   ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **29 November 2023** | **12 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| | International application No. |
|---|---|
| | **PCT/JP2023/034807** |

### C. DOCUMENTS CONSIDERED TO BE RELEVANT

| Category* | Citation of document, with indication, where appropriate, of the relevant passages | Relevant to claim No. |
|---|---|---|
| P, X | WO 2022/244879 A1 (MITSUI CHEMICALS, INC.) 24 November 2022 (2022-11-24) example 11 | 1-13 |

Form PCT/ISA/210 (second sheet) (January 2015)

## INTERNATIONAL SEARCH REPORT
### Information on patent family members

International application No.

**PCT/JP2023/034807**

| Patent document cited in search report | | | Publication date (day/month/year) | Patent family member(s) | | | Publication date (day/month/year) |
|---|---|---|---|---|---|---|---|
| JP | 2022-88914 | A | 15 June 2022 | (Family: none) | | | |
| WO | 2022/009796 | A1 | 13 January 2022 | EP entire text | 4180568 | A1 | |
| | | | | CN | 115777032 | A | |
| WO | 2010/074118 | A1 | 01 July 2010 | US entire text | 2011/0257325 | A1 | |
| | | | | EP | 2372018 | A1 | |
| | | | | CN | 102257209 | A | |
| | | | | KR | 10-2011-0104977 | A | |
| | | | | TW | 201035411 | A | |
| JP | 2005-48343 | A | 24 February 2005 | US entire text | 2006/0258810 | A1 | |
| | | | | WO | 2005/012604 | A2 | |
| | | | | EP | 1652997 | A2 | |
| | | | | EP | 2458084 | A1 | |
| | | | | KR | 10-2006-0054369 | A | |
| JP | 2016-6245 | A | 14 January 2016 | (Family: none) | | | |
| WO | 2022/244879 | A1 | 24 November 2022 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019172355 A
- WO 2017183672 A
- JP 2016102157 A
- WO 2021177158 A
- JP 2022155348 A

### Non-patent literature cited in the description

- Koubunshi Bunseki Handbook (Polymer Analysis Handbook). Asakura Publishing Co., Ltd., 2008, 184-211
- **J.C. RANDALL**. *Macromolecules*, 1982, vol. 15, 353
- **J. RAY**. *Macromolecules*, 1977, vol. 10, 773
- Koubunshi Bunseki Handbook (Polymer Analysis Handbook). Asakura Publishing Co., Ltd., 2008, 184-211